# EUROPEAN PATENT APPLICATION

(11) **EP 4 791 074 A1**
(43) Date of publication of application: **12.08.2026**
(21) Application number: 24884616.4
(22) Date of filing: 25.10.2024
(51) Int. Cl.: H04W 28/02

(54) **SIGNALING TRANSMISSION METHOD, APPARATUS, AND SYSTEM**

(30) Priority: 02.11.2023 CN 202311459511
(71) Applicant: HUAWEI TECHNOLOGIES CO., LTD., Shenzhen, Guangdong 518129 (CN)
(72) Inventor: XING, Weijun, Shenzhen, Guangdong 518129 (CN); YAO, Qi, Shenzhen, Guangdong 518129 (CN); XUE, Yifei, Shenzhen, Guangdong 518129 (CN); WU, Shaoyun, Shenzhen, Guangdong 518129 (CN)
(74) Representative: MERH-IP Matias Erny Reichl Hoffmann Patentanwälte PartG mbB
(86) International application number: PCT/CN2024/127523
(87) International publication number: WO 2025/092613

(57) **Abstract**

A signaling transmission method, an apparatus, and a system are disclosed, and relate to the communication field, to reduce congestion of a control plane and improve signaling transmission efficiency. The method includes: receiving service information, and sending a first signaling packet to a first network element of a service plane based on the service information, where the first signaling packet includes signaling of a first service, the service information indicates information about at least one service that supports signaling sending through the service plane, and the first service is one of the at least one service. In this way, a terminal and a control plane network function CP-NF can transmit a signaling packet (for example, the first signaling packet) through the service plane, so that a probability of congestion occurring on the control plane can be reduced and signaling transmission efficiency can be improved.

## Description

This application claims priority to Chinese Patent Application No. 202311459511.5, filed with the China National Intellectual Property Administration on November 2, 2023 and entitled "SIGNALING TRANSMISSION METHOD, APPARATUS, AND SYSTEM", which is incorporated herein by reference in its entirety.

### TECHNICAL FIELD

This application relates to the field of communication technologies, and in particular, to a signaling transmission method, an apparatus, and a system.

### BACKGROUND

A mobile network may provide a connection service for a terminal, so that signaling packets of various services can be quickly and reliably transmitted between the terminal and a data network (DN, data network). With network evolution, in a future network (for example, a 6th generation (6th generation, 6G) communication system), the network may not only provide the connection service, but also provide various services such as computing, sensing, and data processing.

As types of network services increase, signaling required for implementing the network services also increases accordingly. As a result, signaling overheads on a network control plane are high, and consequently signaling on the network is prone to congestion.

### SUMMARY

This application provides a signaling transmission method, an apparatus, and a system, to reduce congestion of a control plane and improve signaling transmission efficiency.

To achieve the foregoing objective, this application uses the following technical solutions.

According to a first aspect, a technical solution of this application provides a signaling transmission method, where the method may be applied to a terminal device or a component (for example, a chip system) that supports a function of a terminal device. The method includes: receiving service information, where the service information indicates information about at least one service that supports signaling sending through a service plane; and sending a first signaling packet to a first network element of the service plane based on the service information, where the first signaling packet includes signaling of a first service, and the first service is one of the at least one service.

In this application, the terminal device and a network function CP-NF can transmit the signaling packet (for example, the first signaling packet) through the service plane, thereby reducing a probability of congestion on the control plane and improving signaling transmission efficiency. In particular, in a scenario in which signaling is frequently exchanged, a data volume is large, or the CP-NF is deployed on the service plane, signaling transmission through the service plane can reduce a probability of congestion of the control plane, and improve signaling transmission efficiency.

The method may be applicable to a plurality of possible future network development scenarios. For example, large data packet transmission and high-frequency transmission of signaling are supported, and flexible deployment of a network function is supported, for example, the network function is deployed on the service plane or a DN. In addition, transmitting control signaling through the service plane also simplifies implementation of a chip in the terminal device.

In some possible designs, the method further includes:
sending signaling of a second service through a control plane network element based on the service information, where the second service is not among the at least one service, and the second service is a service that does not support signaling sending through the service plane.

In this way, signaling of another service (for example, the second service) can be prevented from occupying a service plane resource.

In some possible designs, the first signaling packet further includes a first identifier, and the first identifier indicates that the first signaling packet is a signaling packet of the service plane; or a quality of service QoS flow to which the first signaling packet is mapped is a first QoS flow, and the first QoS flow is a QoS flow to which the signaling of the service plane of the first service is mapped.

In this way, it can be identified, based on the first identifier or the QoS flow to which the first signaling packet is mapped, that the first signaling packet is a signaling packet that needs to be transmitted through the service plane.

In a possible design, the method further includes:
receiving session information, where the session information includes at least one of the following information: a session rule of the service plane; or a processing manner of the signaling packet of the service plane, where
the session rule includes at least one of the following information: a mapping relationship between the first signaling packet and the QoS flow; information about a target network function of the first signaling packet; or charging information of the first service; and
the processing manner of the signaling packet of the service plane includes any one of the following manners: the signaling packet of the service plane includes one identifier; or the signaling packet of the service plane is mapped to one QoS flow. For example, the signaling packet of the service plane includes the first identifier, and the signaling packet of the service plane is mapped to the first QoS flow.

In this way, the terminal device knows the processing manner of the signaling packet of the service plane, and processes the signaling packet based on this, so that the signaling packet can be transmitted through the service plane and identified by a corresponding network element (for example, a UPF of the service plane).

In addition, the terminal device may determine, based on the session information, a session in which signaling may be transmitted through a service plane packet, and establish a corresponding session or transmit signaling via this established session.

In some possible designs, sending the first signaling packet to the first network element of the service plane based on the service information includes:
sending the first signaling packet to the first network element based on the service information and the session information.

In some possible designs, the first signaling packet is mapped to the first QoS flow, a second signaling packet is mapped to a second QoS flow, the second signaling packet is a signaling packet sent through the control plane network element, and the first QoS flow and the second QoS flow are different QoS flows.

In this way, signaling packets of the service plane can be distinguished by using different mapped QoS flows, and the signaling packets are forwarded. The signaling packets of the service plane do not need to be encapsulated into IP packets. Therefore, a protocol stack can be simplified, for example, an IP layer is not set, and additional operations such as IP encapsulation of signaling by the terminal device are reduced, thereby reducing implementation complexity of the terminal device.

In some possible designs, before receiving the service information, the method further includes:
sending a first message, where the first message includes a first capability indication, the first message is used to request the service information, and the first capability indication indicates that the terminal device supports signaling transmission through the service plane.

In some possible designs, before receiving the session information, the method further includes:
sending a second message, where the second message includes a second capability indication, the second message is used to request the session information, and the second capability indication indicates that the terminal device supports signaling transmission through the service plane.

In some possible designs, sending the second capability indication includes:
sending a session establishment request, where the session establishment request includes the second capability indication, and the session establishment request is used to request to establish a session of the service plane; and
sending the first signaling packet to the first network element on the service plane includes: sending the first signaling packet via the session of the service plane.

In some possible designs, the service information includes at least one of the following information: whether the terminal device is supported in performing signaling sending through the service plane; or the processing manner of the signaling packet of the service plane.

For the terminal device, the processing manner of the signaling packet of the service plane may be configured via service information, or may be configured via session information, or may be configured in another feasible manner.

When the network side supports the foregoing two processing manners, the network side dynamically configures an identifier for the terminal device, where the identifier indicates the terminal device to use a specific processing manner to process the signaling packet of the service plane.

According to a second aspect, a signaling transmission method is provided, and may be applied to a terminal device or a component (for example, a chip system) that supports a function of a terminal device. The method includes: generating signaling of a first service, where the first service is a service that supports the terminal device in performing signaling sending through a service plane; and sending the signaling of the first service to an access device, where the signaling of the first service indicates the access device to send a first signaling packet to a first network element of the service plane, and the first signaling packet includes the signaling of the first service.

In this method, the terminal device still uses a control plane to transmit signaling over an air interface, and a base station encapsulates the signaling into a service plane packet and then forwards the service plane packet to a corresponding service plane functional network element. For example, the terminal device performs signaling transmission with the base station via an RRC message. The base station encapsulates a NAS message of the terminal device into a service plane packet (carrying the first identifier) based on configuration information obtained from an AMF, an SMF, or another network side device, and sends the service plane packet to a UPF, or maps the NAS message to a specific QoS flow.

In some possible designs, the signaling of the first service includes a second identifier, and the second identifier indicates that the signaling of the first service is signaling of the service plane; and/or a name of the signaling of the first service is a name of signaling of at least one service plane.

According to a third aspect, a signaling transmission method is provided, is applied to a first network element of a service plane or a component (for example, a chip system) that supports a function of the network element, and includes: obtaining an identification rule of a first signaling packet, where the first signaling packet includes signaling of a first service, the first service is a service in which a terminal device performs signaling sending through the service plane, and the identification rule is used to identify that the first signaling packet is a signaling packet of the service plane; and receiving the first signaling packet; and sending the first signaling packet to a core network device according to the identification rule.

In this way, the first network element of the service plane can identify, according to the identification rule, that the first signaling packet needs to be transmitted through the service plane, and send the first signaling packet to the core network device based on this, thereby reducing congestion of a control plane.

In some possible designs, the identification rule includes at least one of the following rules: the first signaling packet includes a first identifier, and the first identifier indicates that the first signaling packet is a signaling packet of the service plane; or a quality of service QoS flow to which the first signaling packet is mapped is a first QoS flow, and the first QoS flow is a QoS flow to which the signaling of the service plane of the first service is mapped.

In some possible designs, the core network device is a control plane function network element of a core network.

In this manner, the first network element (for example, the UPF) does not need to know an address of a destination CP-NF network element corresponding to the first signaling packet.

In some possible designs, the core network device is a control plane function network element or a control plane network function CP-NF network element of a core network, and the method further includes:
obtaining address information of a CP-NF network element corresponding to the first signaling packet; and
sending the first signaling packet to the core network device according to the identification rule includes:
   sending the first signaling packet to the core network device according to the identification rule and the address information of the CP-NF network element.

In this manner, the first network element (for example, the UPF) needs to know the address of the destination CP-NF network element corresponding to the first signaling packet, and sends the first signaling packet to the destination CP-NF network element through the control plane function network element (for example, an SMF) of the core network based on the address, or directly sends the first signaling packet to the destination CP-NF network element.

In some possible designs, the CP-NF network element is a first CP-NF network element, and the method further includes:
receiving address information of a second CP-NF network element corresponding to the first signaling packet; and
sending the first signaling packet to the control plane function network element of the core network or to the second CP-NF network element based on the address information of the second CP-NF network element.

In this way, when a destination CP-NF network element corresponding to the signaling packet of the first service changes, the first network element can learn of an address of the updated destination CP-NF network element in time, and send the signaling packet of the first service based on this, thereby improving a success rate of signaling transmission.

In addition, the network side may flexibly configure a service plane path based on a location of the terminal device, network function load, and the like, select an appropriate CP-NF to provide a service for the terminal device, and notify the first network element (for example, the UPF) of the service plane or the control plane function network element (for example, the SMF) of the core network of address information of the selected appropriate CP-NF (for example, the second CP-NF).

Optionally, the CP-NF may be deployed on the control plane or the service plane. Different deployment manners correspond to that the first network element (for example, the UPF) may forward signaling to a corresponding CP-NF through different paths or interfaces.

In addition, in this manner, network information (for example, the CP-NF address) is not exposed to the terminal device, thereby reducing implementation complexity of the terminal device.

According to a fourth aspect, a signaling transmission method is provided, applied to a control plane function network element of a core network or a component (for example, a chip) that supports a function of this network element, and the method includes:
obtaining an identification rule, where the identification rule is used to identify that a first signaling packet is a signaling packet of a service plane, the first signaling packet includes signaling of a first service, the first service is a service that supports a terminal device in performing signaling sending through the service plane, and the first network element is configured to forward the signaling packet of the service plane; and
sending the identification rule to the first network element.

In a possible design, the method further includes:
receiving the first signaling packet from the first network element;
obtaining address information of a control plane network function CP-NF network element corresponding to the first signaling packet; and
sending the first signaling packet to the CP-NF network element based on the address information of the CP-NF network element.

In some possible designs, the CP-NF network element is a first CP-NF network element, and the method further includes:
receiving address information of a second CP-NF network element corresponding to the first signaling packet; and
sending the first signaling packet to the second CP-NF network element based on the address information of the second CP-NF network element.

In some possible designs, identifying that the first signaling packet is the signaling packet of the service plane includes:
identifying, based on one or more of session information, a policy control and charging PCC rule, and information about a CP-NF network element carried in the first signaling packet, that the first signaling packet is the signaling packet of the service plane.

In a possible design, the method further includes:
receiving a second capability indication, where the second capability indication indicates that the terminal device supports signaling transmission through the service plane; and
generating the identification rule includes:
   sending the second capability indication to a second network element;
   receiving session information corresponding to the second capability indication from the second network element; and
   generating the identification rule based on the session information. In some possible designs, the session information includes at least one of the following information: an identifier corresponding to a target network function of the first signaling packet; charging information of the first service; or a quality of service QoS parameter of the first signaling packet.

In some possible designs, the identification rule includes at least one of the following rules: the first signaling packet includes a first identifier, and the first identifier indicates that the first signaling packet is a signaling packet of the service plane; or a quality of service QoS flow to which the first signaling packet is mapped is a first QoS flow, and the first QoS flow is a QoS flow to which the signaling of the service plane of the first service is mapped.

According to a fifth aspect, a signaling transmission method is provided, applied to an access device or a component (for example, a chip system) that supports a function of this device, and the method includes:
receiving signaling of a first service, where the first service is a service that supports a terminal device in performing signaling sending through a service plane; and
sending a first signaling packet to a first network element of the service plane, where the first signaling packet includes the signaling of the first service.

In this method, the terminal device still uses a control plane to transmit signaling over an air interface, and a base station encapsulates the signaling into a service plane packet and then forwards the service plane packet to a corresponding service plane functional network element.

In some possible designs, the signaling of the first service includes a second identifier, and the second identifier indicates that the signaling of the first service is signaling of the service plane; and/or a name of the signaling of the first service is a name of the signaling of the service plane.

According to a sixth aspect, a signaling transmission method is provided, applied to a second network element or a component (for example, a chip system) that supports a function of this network element, and the method includes:
receiving first capability indication information, where the first capability indication indicates that a terminal device supports signaling transmission through a service plane; and
sending service information corresponding to the first capability indication, where the service information indicates information about at least one service that supports signaling sending through the service plane.

In a possible design, the method further includes:
receiving a second capability indication, where the second capability indication indicates that the terminal device supports signaling transmission through the service plane; and
sending session information corresponding to the second capability indication, where the session information includes at least one of the following information: a session rule of the service plane; or a processing manner of a signaling packet of the service plane, where
the session rule includes at least one of the following information: a mapping relationship between a first signaling packet and a quality of service QoS flow; information about a target network function of a first signaling packet; or charging information of a first service; and
the processing manner of the signaling packet of the service plane includes any one of the following manners: the signaling packet of the service plane includes one identifier; or the signaling packet of the service plane is mapped to one QoS flow.

According to a seventh aspect, a technical solution of this application provides a device, including one or more processors, a memory, and one or more computer programs. The processor is coupled to the memory, the one or more computer programs are stored in the memory, and when the device runs, the processor executes the one or more computer programs stored in the memory, so that the device performs the method in any design of any one of the foregoing aspects.

According to an eighth aspect, this application provides a device, including a function module configured to perform the method according to any possible design of any one of the foregoing aspects of this application. The module may be implemented by using software or hardware, or implemented by using a combination of software and hardware. For example, the device includes a processing unit and a communication unit.

According to a ninth aspect, a technical solution of this application provides a computer-readable storage medium, including computer instructions. When the computer instructions are run on a device, the device is enabled to perform the method in any possible design of any one of the foregoing aspects.

According to a tenth aspect, a technical solution of this application provides a computer program product. When the computer program product runs on a device, the device is enabled to perform the method in any possible design of any one of the foregoing aspects.

According to an eleventh aspect, a technical solution of this application provides a signaling transmission system. The system includes the terminal device and the first network element (for example, the UPF) of the service plane in any possible design of any one of the foregoing aspects. Alternatively, the system includes the terminal device, the first network element of the service plane, and the control plane function network element (for example, an SMF) of the core network in any possible design of any one of the foregoing aspects. Optionally, the system may further include the access device and the second network element in any possible design of any one of the foregoing aspects. For example, the system includes the terminal device in any possible design of the second aspect, the access device in any possible design of the fifth aspect, and the first network element of the service plane.

### BRIEF DESCRIPTION OF DRAWINGS

FIG. 1 is a diagram of an architecture of a system according to an embodiment of this application;
FIG. 2 and FIG. 3 are diagrams of architectures of interfaces between devices according to an embodiment of this application;
FIG. 4 is a diagram of another architecture of a system according to an embodiment of this application;
FIG. 5 is a diagram of another architecture of a system according to an embodiment of this application;
FIG. 6 is a diagram of an architecture of a device according to an embodiment of this application;
FIG. 7 and FIG. 8A and FIG. 8B are schematic flowcharts of a signaling transmission method according to an embodiment of this application;
FIG. 9A to FIG. 12 are diagrams of scenarios of a signaling transmission method according to an embodiment of this application;
FIG. 13 and FIG. 14 are schematic flowcharts of a signaling transmission method according to an embodiment of this application;
FIG. 15 is a diagram of a structure of a communication apparatus according to an embodiment of this application; and
FIG. 16 is a diagram of a structure of a chip system according to an embodiment of this application.

### DESCRIPTION OF EMBODIMENTS

A terminal device may send data to a user plane function (user plane function, UPF) network element via a base station, and the UPF network element forwards a data packet of the terminal device to a data network of a user plane. A data packet is a packet that carries data. The data packet may also be referred to as a packet of the data. Different from a forwarding procedure of the data packet, the terminal device may exchange a signaling packet with a control plane (control plane, CP) network function (network function, NF) network element through an access and mobility management (access and mobility management function, AMF) network element. The signaling packet is a packet that carries signaling, and the signaling may also be referred to as control signaling. The signaling packet may also be referred to as a packet of signaling.

In some solutions, the terminal device exchanges signaling with the CP-NF through the AMF. For example, for some pieces of signaling, the terminal device sends the signaling to the AMF, and the AMF forwards the signaling to the CP-NF corresponding to the signaling. For another example, for some pieces of signaling, the terminal device sends the signaling to the AMF, and the AMF forwards the signaling to the corresponding CP-NF through another network element (for example, a session management function (session management function, SMF) network element) of a control plane.

With development of mobile networks, a new network architecture may be implemented in a future mobile network. For example, a CP-NF may be deployed on a user plane. For another example, a control function and a service processing function are co-deployed. In these deployment solutions, the CP-NF needs to be deployed at a network edge, and is closer to a location of a user terminal device. When the UE and the CN need to exchange a large amount of control signaling at a high frequency, signaling congestion occurs, and consequently, a high processing latency is caused.

An embodiment of this application provides a service plane, and the service plane may be considered as an extension of a user plane. Different from that in a conventional technology in which a user plane transmits a data packet and a control plane transmits a signaling packet, in this embodiment of this application, the service plane may be configured to carry a data packet and a signaling packet of a service. Services carried on the service plane are different from conventional services. The conventional services are transmitted through the user plane. The services carried on the service plane refer to various generalized services, such as a data processing service, a connection service, a sensing service, a computing service, and an intelligent service. Correspondingly, the service plane may include but is not limited to at least one of the following: a data plane, a connection plane, a sensing service, a computing plane, an intelligent plane, and a user plane.

Services such as computing and sensing of the service plane may be used as independent service functions in a core network, to provide corresponding services for a terminal device. For example, a UPF of the user plane provides a connection service. For another example, a task processing function (task processing function, TPF) is used to execute an AI task. For another example, a sensing processing function (sensing processing function, SPF) is used to process sensing data. The service plane may further have another service function. This is not limited in embodiments of this application. Names of the service functions may be alternatively other names. This is not limited.

To resolve the foregoing technical problem, an embodiment of this application provides a signaling transmission method, to transmit a signaling packet (for example, a first signaling packet) through the foregoing service plane. In this way, congestion of a control plane can be reduced, and signaling transmission efficiency can be improved.

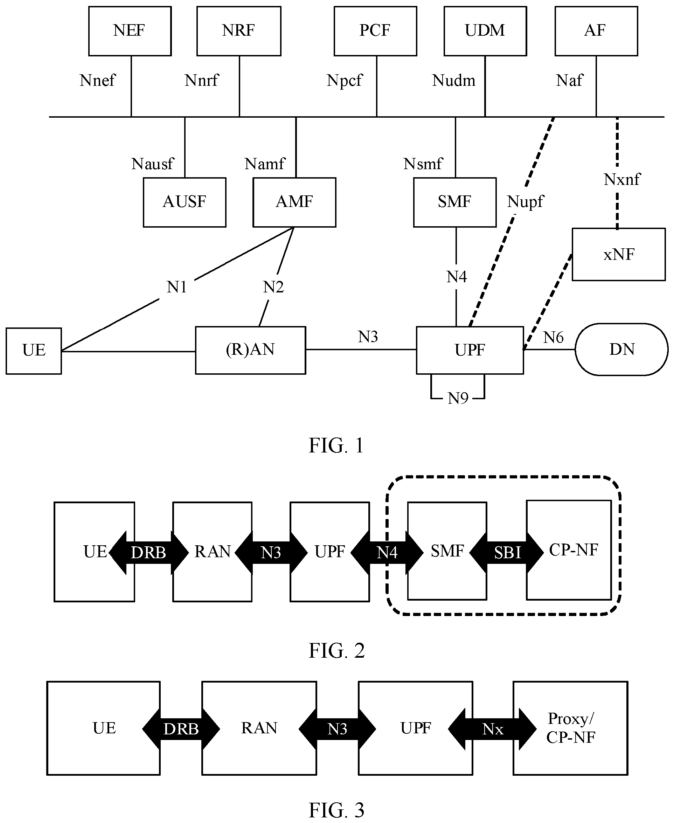

The method is applicable to 5G, 6G, or another mobile communication system. For example, FIG. 1 shows an example of a network architecture according to an embodiment of this application. The system includes an AMF, an SMF, a UPF network element, a unified data management (unified data management, UDM) network element, a policy control function (policy control function, PCF) network element, an authentication server function (authentication server function, AUSF) network element, a network exposure function (network exposure function, NEF) network element, a network function repository function (network function repository function, NRF) network element, and some network elements that are not shown. This is not specifically limited in this embodiment of this application.

The AMF may be configured to perform access management. The UDM may be configured to manage user subscription data, manage user identifiers, and the like. A unified data repository (unified data repository, UDR) may be configured to store user subscription or authorization data, and store application-related data. The SMF may be configured to establish and manage a session for a terminal device, and configure a signaling packet forwarding rule and a quality of service (quality of service, QoS) processing rule of the service plane. The PCF may be configured to send UE policy information to the terminal device, send an access management policy of UE to the AMF, and send a session management policy to the SMF. The UPF may be configured to forward a data packet between UE and a DN based on a session rule configured by the SMF.

As shown in FIG. 1, in this embodiment of this application, a terminal device may access a network via an access device of an access network (access network, AN). The access network includes but is not limited to a radio access network (radio access network, RAN). The terminal device communicates with the AMF network element through an N1 interface, the access device communicates with the AMF network element through an N2 interface, the access device communicates with the UPF network element through an N3 interface, the SMF network element communicates with the UPF network element through an N4 interface, and the UPF network element accesses a data network through an N6 interface.

FIG. 1 shows only a connection manner between some network elements. The some network elements may alternatively communicate with each other in another manner. In addition, for a connection manner between other network elements, refer to a related technology. This is not limited in embodiments of this application. For example, the AMF network element communicates with the SMF network element through an N11 interface, the AMF network element communicates with the UDM network element through an N8 interface, the AMF network element communicates with the AUSF network element through an N12 interface, the AMF network element communicates with the PCF network element through an N15 interface, the SMF network element communicates with the PCF network element through an N7 interface, and the NEF network element communicates with the SMF network element through an N29 interface.

FIG. 2 shows an example of a connection relationship between devices involved in signaling transmission through a service plane. An SMF may communicate with a control plane CP-NF through a current service-based interface (service-based interface, SBI). User equipment (UE) may encapsulate a non-access stratum (non-access stratum, NAS) message into a signaling packet of the service plane, and send the signaling packet to the SMF through a UPF, and the SMF forwards the signaling packet to the CP-NF.

FIG. 3 shows another example of a connection relationship between devices involved in signaling transmission through a service plane. An interface Nx may be newly added between a UPF and a CP-NF. A terminal device may directly send a signaling packet to the CP-NF through the UPF.

In this embodiment of this application, an example in which the service plane is a user plane and control signaling is transmitted via a user plane session is used for description, and the UPF network element and an SMF network element are mainly involved. With development of future networks, more service planes, such as a computing plane, a data plane, and an intelligent plane, are also applicable to technical solutions in embodiments of this application. In a system including the service plane, the SMF in the example in this application may be replaced with a network function that manages service execution on a control plane, and the UPF may be replaced with a corresponding function that executes a service or forwards service data on the service plane, to implement solutions in embodiments of this application. This is uniformly described herein, and details are not described below again.

Optionally, the terminal device (terminal device) in embodiments of this application may include various handheld devices, vehicle-mounted devices, wearable devices, and computing devices that have a wireless communication function, or other processing devices connected to a wireless modem. The terminal device may further include a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld (handheld) device, a laptop computer (laptop computer), a cordless phone (cordless phone) or a wireless local loop (wireless local loop, WLL) station, a machine type communication (machine type communication, MTC) terminal device, user equipment (user equipment, UE), a mobile station (mobile station, MS), relay user equipment, or the like. The relay user equipment may be, for example, a 5G residential gateway (residential gateway, RG). For ease of description, the devices mentioned above are collectively referred to as a terminal device in embodiments of this application. In some examples, the terminal device needs to register with an operator network, so as to use a network provided by an operator, for example, a mobile phone with a SIM card inserted, or an internet of things device with an eSIM card.

Optionally, the access device in embodiments of this application is a medium for the terminal device to access a core network. The access device is configured to: manage a radio resource, classify uplink and downlink data, apply QoS, complete signaling processing with the control plane network element, and complete data forwarding with a user plane function network element. The access device may be, for example, a 3rd generation partnership project (3rd generation partnership project, 3GPP) access device like a next generation radio access network (next generation radio access network, NG-RAN) device in a 5G network, an evolved universal terrestrial radio access network (evolved universal terrestrial radio access network, E-UTRAN) device in a 4G network, or a base station. There may be various forms of base stations, for example, a macro base station, a micro base station (also referred to as a small cell), a relay station, and an access point. That the terminal device accesses the core network via the 3GPP access device may be referred to as a 3GPP access manner. In this way, the terminal device can communicate with the core network device.

The access device may alternatively be a non-3GPP access device, for example, a non-3GPP interworking function (non-3gpp interworking function, N3IWF) entity. That the terminal device accesses the core network via the non-3GPP device may be referred to as a non-3GPP access manner.

The access device may alternatively be a device in a non-3GPP network. The non-3GPP network includes but is not limited to a wireless local area network (wireless local area network, WLAN), for example, Wi-Fi. The non-3GPP device may include a non-3GPP access point (access point, AP). The access point includes but is not limited to a router, an optical modem, and the like. A form of the access device is not limited in embodiments of this application. For example, the access device may alternatively be a broadband network gateway (broadband network gateway, BNG) or an aggregation switch.

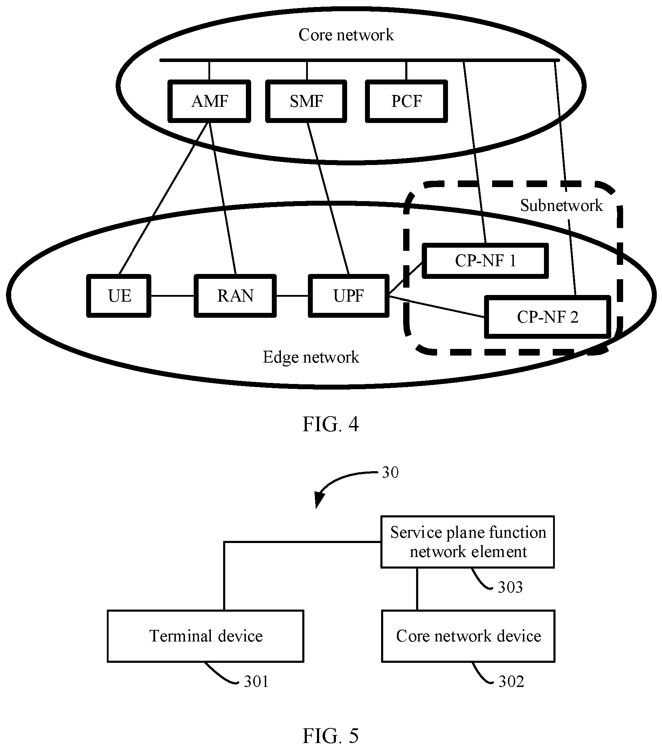

FIG. 4 shows a system architecture in which a CP-NF is deployed in an edge network. As shown in FIG. 4, a CP-NF 1 and a CP-NF 2 are deployed in an edge network that is close to a terminal device.

It should be noted that FIG. 1 to FIG. 4 are merely diagrams of communication system architectures according to embodiments of this application. Certainly, the system architecture may alternatively be another architecture, for example, a future 6G network architecture. This is not specifically limited in this embodiment.

It should be noted that names of the network elements in FIG. 1 to FIG. 4 and names of interfaces between the network elements are merely examples. In specific implementation, the names of the network elements and the names of the interfaces between the network elements may be other names, for example, names of network elements in a 6G network and names of interfaces between the network elements in the 6G network. This is not specifically limited in embodiments of this application.

The following describes the technical solutions in embodiments of this application with reference to the accompanying drawings in embodiments of this application. In description of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in descriptions of this application, unless otherwise specified, "a plurality of" means two or more. In addition, to clearly describe technical solutions in embodiments of this application, terms such as "first" and "second" are used in the embodiments of this application to distinguish between same items or similar items whose functions and purposes are basically the same. A person skilled in the art may understand that the terms such as "first" and "second" do not limit a quantity and an execution sequence, and the terms such as "first" and "second" do not indicate a definite difference.

In addition, a network architecture and a service scenario described in embodiments of this application are intended to describe the technical solutions in embodiments of this application more clearly, and constitute no limitation on the technical solutions provided in embodiments of this application. A person of ordinary skill in the art may learn that with evolution of the network architecture and emergence of a new service scenario, the technical solutions provided in embodiments of this application are also applicable to similar technical problems.

In this embodiment of this application, that A sends a message to B may be that A directly sends the message to B, or A may forward the message to B via another device. The another device may directly forward the message to B, or forward the message to B after processing the message.

FIG. 5 shows a communication system 30 according to an embodiment of this application. The communication system 30 includes a terminal device 301, a service plane function network element 303, and a core network device 302.

The terminal device 301 is configured to send a first signaling packet to the service plane function network element 303. The first signaling packet includes signaling related to a first service, and the first service is a service in which the terminal device can perform signaling sending through a service plane.

The service plane function network element 303 is configured to forward a signaling packet of the service plane. Specifically, the service plane function network element 303 obtains an identification rule of the first signaling packet; receives the first signaling packet; and sends the first signaling packet to a core network device according to the identification rule.

The core network device 302 is configured to receive and process the first signaling packet.

In some embodiments, the core network device may be a control plane function network element (for example, an SMF) of a core network. That is, the service plane function network element 303 sends the first signaling packet to the control plane function network element of the core network, and the control plane function network element of the core network sends the first signaling packet to this CP-NF based on the information about the CP-NF corresponding to the first signaling packet.

In some other embodiments, the core network device may be a control plane function network element (for example, an SMF) or a CP-NF network element of a core network. In this manner, the service plane function network element 303 obtains address information of a CP-NF network element corresponding to the first signaling packet, and sends the first signaling packet to the CP-NF based on the address information, or sends the first signaling packet to the CP-NF through the control plane function network element of the core network based on the address information.

Optionally, the communication system provided in this embodiment of this application may be used in the network architecture shown in FIG. 1 to FIG. 5. This is not specifically limited in this embodiment of this application.

For example, if the communication system provided in this embodiment of this application is used in the network architecture shown in FIG. 1 to FIG. 5, a network element or an entity corresponding to the service plane function network element 303 may be the UPF or a network element of another service plane. The core network device 302 may be an SMF, a CP-NF, or another network element of a control plane. Optionally, the system shown in FIG. 5 may further include an access device, for example, a base station.

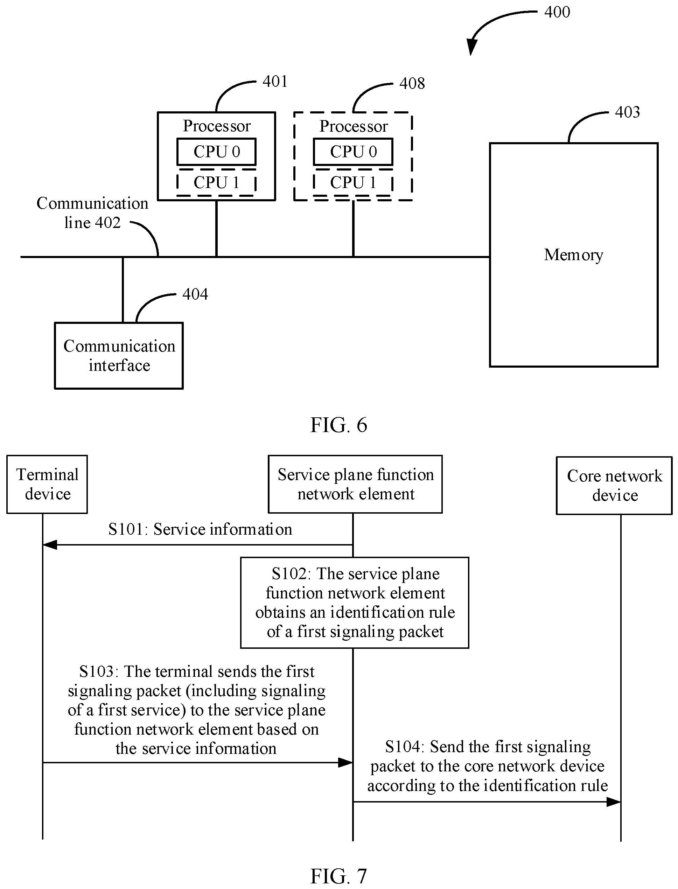

For example, the terminal device, the access device, the service plane function network element, or the core network device in the embodiments of this application may be implemented via a communication apparatus in FIG. 6. FIG. 6 is a diagram of a hardware structure of a communication apparatus according to an embodiment of this application. The communication apparatus 400 includes at least one processor 401, a memory 403, and at least one communication interface 404.

The processor 401 may be a general-purpose central processing unit (central processing unit, CPU), a microprocessor, an application-specific integrated circuit (application-specific integrated circuit, ASIC), or one or more integrated circuits configured to control program execution of solutions in this application.

Optionally, the communication apparatus may include a communication line 402. The communication line 402 may include a path for transmitting information between corresponding components of the apparatus.

The communication interface 404, which uses any type of apparatus like a transceiver, is configured to communicate with another device or a communication network, for example, the Ethernet, a RAN, and a wireless local area network (wireless local area network, WLAN).

The memory 403 may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disk storage, an optical disc storage (including a compact disc, a laser disc, an optical disc, a digital versatile disc, a Blu-ray disc, and the like), a magnetic disk storage medium or another magnetic storage device, or any other medium that can carry or store expected program code in a form of an instruction or a data structure and that can be accessed by a computer, but is not limited thereto. The memory may exist independently, and is connected to the processor through the communication line 402. The memory may alternatively be integrated with the processor.

The memory 403 is configured to store computer-executable instructions for performing the solutions in this application, and the processor 401 controls execution. The processor 401 is configured to execute the computer-executable instructions stored in the memory 403, to implement the method provided in embodiments of this application.

Optionally, the computer-executable instructions in this embodiment of this application may also be referred to as application program code. This is not specifically limited in this embodiment of this application.

During specific implementation, in an embodiment, the processor 401 may include one or more CPUs, for example, a CPU 0 and a CPU 1 in FIG. 6.

During specific implementation, in an embodiment, the communication apparatus 400 may include a plurality of processors, for example, the processor 401 and a processor 408 in FIG. 6. Each of the processors may be a single-core (single-CPU) processor, or may be a multi-core (multi-CPU) processor. The processor herein may be one or more devices, circuits, and/or processing cores configured to process data (for example, computer program instructions).

The communication apparatus 400 may be a general-purpose device or a dedicated device. A type of the communication apparatus 400 is not limited in this embodiment of this application.

The following describes in detail a communication method provided in embodiments of this application.

It should be noted that names of messages between network elements, names of parameters in the messages, or the like in the following embodiments of this application are merely examples, and there may be other names in a specific implementation. This is not specifically limited in embodiments of this application.

In this specification, an example in which the service plane function network element (the first network element) is a UPF and the access device is a base station is mainly used, but this does not constitute a limitation on an implementation form of a corresponding network element.

First, the communication system shown in FIG. 5 is used in the network architecture shown in FIG. 1 to FIG. 4. As shown in FIG. 7, a communication method provided in an embodiment of this application includes the following steps.

S101: A service plane function network element sends service information to a terminal device. Correspondingly, the terminal device receives the service information from the service plane function network element.

The service information indicates information about at least one service that supports signaling sending through a service plane. Optionally, the service information includes service subscription or authorization information of the terminal device, and/or service policy information of the terminal device.

In embodiments of this application, a service suitable for transmitting a signaling packet through the service plane is not limited, and may be any service provided by a network, for example, a session service, a sensing service, an AI service, a computing service, or a data service.

Optionally, the service information includes but is not limited to at least one of the following information: an identifier of at least one service that supports signaling sending through the service plane; whether the terminal device is allowed to perform signaling sending through the service plane or supported in performing signaling sending through the service plane; information about a CP-NF corresponding to a service that supports signaling sending through the service plane; a session parameter corresponding to at least one service that supports signaling sending through the service plane (the session parameter may be used by the terminal device to establish a session used to transmit a packet); or a rule of at least one service that supports signaling sending through the service plane.

Optionally, the service identifier includes but is not limited to a service type and a service identification (service identification) number. The information about the CP-NF corresponding to the service includes at least one of the following information: a CP-NF type, a CP-NF identifier, a CP-NF address, or a service interface of the CP-NF. Optionally, the service rule includes at least one of the following: a service use condition; or a service execution rule. The service use condition includes at least one of the following conditions: a time at which a service is allowed to be used, a location at which a service is allowed to be used, and a radio interface (for example, a 3GPP interface, a non-3GPP interface, a PC5 interface, or a satellite communication interface) at which a service is allowed to be used; or whether the terminal device is allowed to use a first service corresponding to a first capability indication. The service execution rule includes at least one of the following rules: a processing manner (or referred to as a processing rule) of the signaling packet of the service plane; a QoS parameter of the signaling packet of the service plane; an interface priority; information about a communication frequency band of the signaling packet transmitted through the service plane; or a processing manner of a failure in sending of the signaling packet transmitted through the service plane. Optionally, the QoS parameter includes but is not limited to at least one of the following parameters: a latency of a QoS flow; a transmission rate of a QoS flow; or a packet loss rate of a QoS flow. For example, the transmission rate, the latency, or the packet loss rate that needs to be met during transmission of the signaling packet is dynamically configured, or a standardized QoS value is configured, for example, pre-configured in a protocol. The session parameter includes at least one of the following information: a correspondence between a DNN and the first service; a correspondence between a slice and the first service; or a session type corresponding to the first service. The interface priority is used when one terminal device can be connected to all of a plurality of radio interfaces, and the terminal device may determine, based on the interface priority, a specific radio interface that is preferably used to establish a session, or the terminal device uses an existing session to transmit the signaling packet of the service plane.

Because transmission paths of the signaling packet of the service plane and a signaling packet of a control plane are different, the terminal device processes the signaling packet of the service plane in a manner different from that of processing the signaling packet of the control plane, to distinguish the signaling packet of the service plane from the signaling packet of the control plane. In a possible implementation, the terminal device may obtain the processing manner of the signaling packet of the service plane, and send, to the service plane function network element in the processing manner, a first signaling packet including signaling, so that the service plane function network element can identify that the first signaling packet is the signaling packet of the service plane.

Optionally, a forwarding processing manner of the signaling packet of the service plane includes a forwarding processing manner of an uplink signaling packet and/or a forwarding processing manner of a downlink signaling packet. The downlink signaling packet is a signaling packet sent by the service plane function network element to a base station. The uplink signaling packet is a signaling packet sent by the service plane function network element to a corresponding CP-NF.

Optionally, the processing manner of the signaling packet of the service plane includes at least one of the following: (1) The signaling packet of the service plane includes one identifier (for example, a first identifier), and the identifier indicates that the packet is the signaling packet of the service plane; or (2) the signaling packet of the service plane is mapped to one QoS flow (for example, a first QoS flow). For example, the service information (for example, a policy of the terminal device) carries a processing manner of uplink service signaling on the service plane.

For example, the service information indicates a sensing service, a computing service, and an intelligent service that are included in the services that support signaling sending through the service plane; a CP-NF address corresponding to the sensing service, a CP-NF address corresponding to the computing service, and a CP-NF address corresponding to the intelligent service; and a session parameter corresponding to the sensing service, a session parameter corresponding to the computing service, and a session parameter corresponding to the intelligent service. Table 1-1 shows an example of some pieces of information in the service information. It should be noted that the CP-NF address indicates this CP-NF. In this embodiment of this application, the CP-NF address is used as an example to indicate the CP-NF. In an actual implementation, the CP-NF may alternatively be indicated by other indication information, for example, an identifier of the CP-NF or tunnel information of the CP-NF. The indication information of the CP-NF is not specifically limited in this application.

**Table 1-1 Service information**

| Service that supports signaling transmission through the service plane | CP-NF address | Session parameter |
|---|---|---|
| Sensing service | xx | aa |
| Computing service | yy | bb |
| Intelligence service | zz | cc |

Optionally, there may be a many-to-one relationship between the service and the foregoing parameter. For example, both the sensing service and the computing service correspond to the CP-NF address xx and the session parameter bb. A specific correspondence between the service and the foregoing parameter is not limited in embodiments of this application.

Optionally, services that are of different terminal devices and that may support signaling sending through the service plane are the same or different. Table 1-2 shows an example of service information delivered by a network side to another terminal device.

**Table 1-2 Service information**

| Service that supports signaling transmission through the service plane | CP-NF address | Session parameter |
|---|---|---|
| Sensing service | xx | aa |
| Data processing service | ax | ls |
| Intelligence service | zz | cc |

Optionally, the service information further includes an identifier (identifier, ID) of the terminal device. There is a one-to-one or many-to-one relationship between the CP-NF and the UE ID. One terminal device corresponds to one CP-NF, and the CP-NF provides a signaling processing service for the terminal device. Alternatively, one terminal device may correspond to a plurality of CP-NFs, and the plurality of CP-NFs provide signaling processing for the terminal device.

In a possible implementation, the service subscription or authorization information in the service information may be generated by, but not limited to, a user subscription management function (for example, a UDM), and is delivered to the terminal device. The service policy information may be generated by, but not limited to, a policy control function (for example, a PCF), and is delivered to the terminal device.

Information used by the terminal device to determine whether signaling of a service needs to be transmitted through the service plane may alternatively be carried in other information other than the service information. This is not limited in embodiments of this application.

Optionally, before S101, the terminal device sends the first capability indication to a second network element, where the first capability indication indicates that the terminal device supports signaling transmission through the service plane. Correspondingly, the second network element receives the first capability indication from the terminal device. The second network element sends the service information to the terminal device based on the first capability indication of the terminal device.

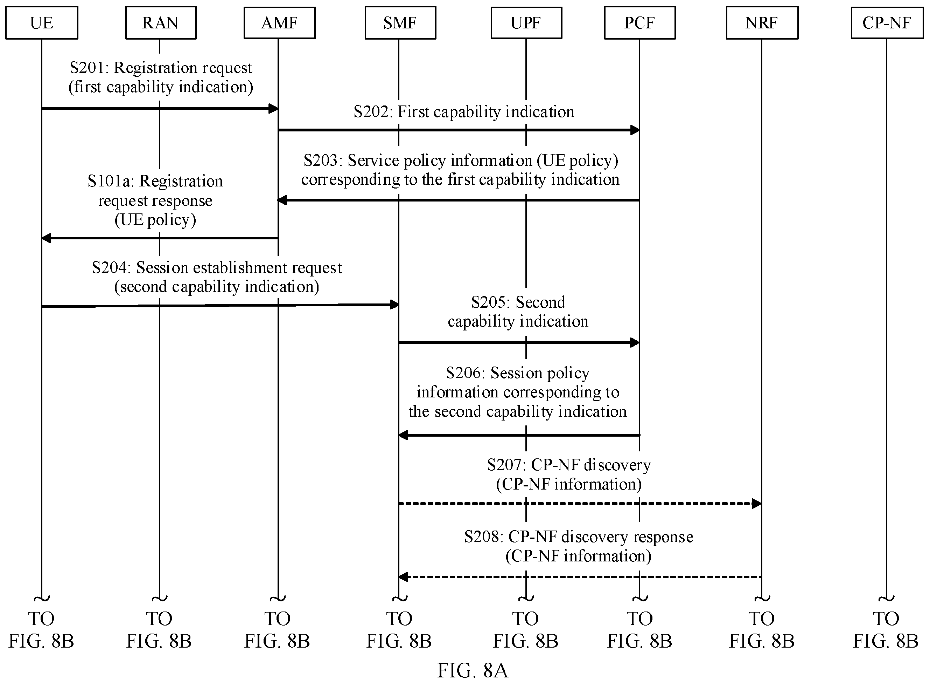

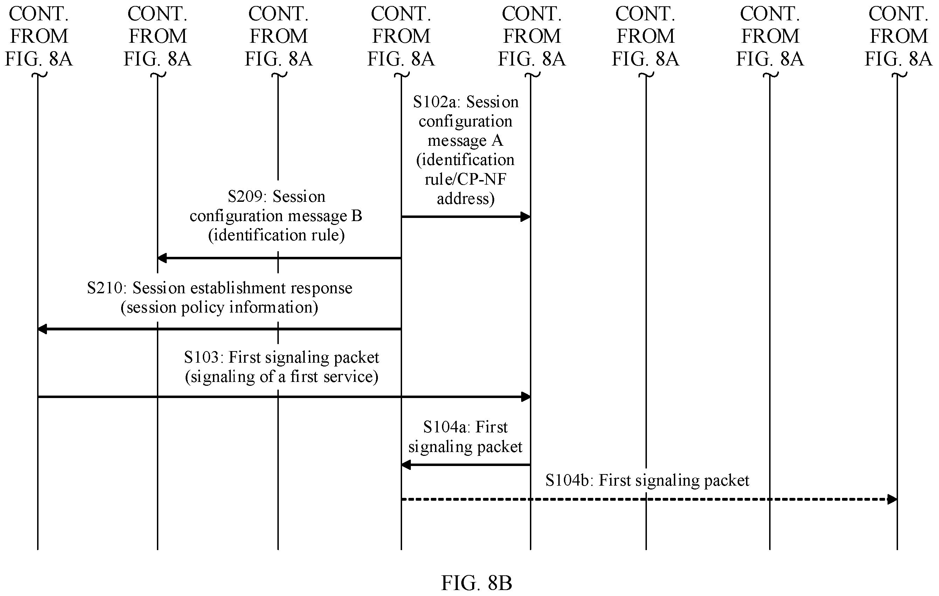

In a possible implementation, that the terminal device sends the first capability indication may be implemented as follows: sending a first message, where the first message includes the first capability indication. For example, the first message is a registration request. For example, as shown in FIG. 8A and FIG. 8B, UE sends the registration request to an AMF, where the registration request includes the first capability indication (S201). Correspondingly, the AMF receives the registration request. After obtaining the first capability indication of the UE, the AMF sends the first capability indication to a PCF (an example of the second network element) (S202). Correspondingly, the PCF receives the first capability indication. Optionally, the AMF may send the first capability indication to the PCF through an SMF.

After receiving the first capability indication corresponding to the UE, the PCF performs service policy information association, determines service policy information corresponding to the first capability indication, and sends the service policy information to the AMF (S203). Correspondingly, the AMF receives the service policy information. Correspondingly, S101 may be implemented as follows: S101a: The AMF sends a registration request response to the UE, where the registration request response includes the service policy information. Correspondingly, the UE receives the registration request response from the AMF.

Optionally, the first capability indication may be an indication identifier, and the indication identifier indicates that the terminal device supports signaling transmission through the service plane.

Alternatively, the first capability indication may be a specific data network name (data network name, DNN). The specific DNN indicates that the terminal device supports signaling transmission through the service plane. For example, after receiving a session establishment request including the specific DNN, the SMF learns that a session corresponding to the DNN can be used to transmit the signaling packet of the service plane, and therefore can determine that the terminal device supports signaling transmission through the service plane. The SMF requests session policy information from the PCF, for example, sends a first request, where the first request carries the first capability indication. The PCF determines, based on the first capability indication, that the terminal device supports signaling transmission through the service plane, and sends, to the SMF, the session policy information corresponding to the signaling packet of service plane based on this.

Optionally, a format of first indication information received by the SMF may be different from a format of first indication information sent by the SMF to the PCF. For example, the first indication information received by the SMF may be a specific DNN, and the first indication information sent by the SMF to the PCF may be an indication identifier.

Alternatively, the first capability indication may be an identifier of a specific network slice, and the identifier of the specific network slice indicates that the terminal device supports signaling transmission through the service plane. Alternatively, the first capability indication may include a specific DNN and an identifier of a specific network slice. For example, the registration request carries the specific DNN and the identifier of the specific network slice. A specific implementation of the first capability indication is not limited in embodiments of this application.

In FIG. 8A and FIG. 8B, an example in which the service information is service policy information is used. In some other embodiments, the terminal device may obtain the service subscription or authorization information from, for example, a UDM, as the service information. Alternatively, the terminal device may obtain the service policy information and the service subscription or authorization information, use both of the service policy information and the service subscription or authorization information as the service information, and transmit signaling through the service plane based on the service information.

In FIG. 8A and FIG. 8B, an example in which the terminal device reports the first capability indication is used. In some other embodiments, the terminal device may not report the first capability indication. For example, if a subscription or a policy of the UE in a network indicates that the UE supports transmission of signaling of one or more services through the service plane, the UE may not report the first capability indication to the network.

Optionally, the service information may further indicate whether the terminal device is allowed to use a network service corresponding to the first capability indication. For example, the first capability indication indicates that the terminal device supports transmission of signaling of the sensing service through the service plane, and the service information corresponding to the first capability indication indicates that the terminal device is allowed to use the sensing service, and indicates that the terminal device is allowed to transmit the signaling of the sensing service through the service plane.

Optionally, the registration request may alternatively be replaced with a service request, and correspondingly, the registration request response may be replaced with a service request response. To be specific, the terminal device initiates the service request, and receives the service request response, where the service request response carries the service information (for example, the service policy information). Alternatively, the registration request may be replaced with a handover request, and correspondingly, the registration request response may be replaced with a handover request response. For example, if a location of the terminal device changes, a network that provides a service for the terminal device may change, and the corresponding service information may change. In this case, the terminal device may initiate the handover request, and receive the handover request response, where the handover request response includes the service information.

A specific manner in which the terminal device obtains the service information is not limited in embodiments of this application. For example, the service information may be obtained periodically, or may be triggered by an event.

In this method, the terminal device receives the service information from the network side. In this way, the terminal device may determine, based on the service information, the processing manner of sending the signaling through the service plane, and send the signaling through the service plane based on this.

Optionally, the terminal device may further receive session information. In a possible implementation, the terminal device sends a second message, where the second message includes a second capability indication, and the second capability indication indicates that the terminal device supports signaling transmission through the service plane; and the terminal device receives session information corresponding to the second capability indication, where the session information includes at least one of the following information: a session rule of the service plane; or a processing manner of a signaling packet of the service plane. The session rule is a rule for processing a packet of a session by the network side after the session is established.

Optionally, the session rule includes at least one of the following parameters: a mapping relationship between a first signaling packet and a QoS flow; a mapping relationship between a first service and a QoS flow; a QoS parameter of this QoS flow; information (like an address) about a target CP-NF of a first signaling packet; or charging information of a first service. The session information may carry a processing manner of an uplink signaling packet of the service plane, for example, a mapping relationship between a packet and a QoS flow. A manner of processing a downlink signaling packet of the service plane may be that the second network element sends information (for example, an SM Policy) to a control plane function network element of a core network. The information may carry the manner of processing the downlink signaling packet of the service plane. The control plane function network element of the core network configures the processing manner for the service plane function network element, so that the service plane function network element can process the downlink signaling packet in the processing manner. It should be noted that, in the embodiment shown in FIG. 8A and FIG. 8B, a UPF corresponds to the service plane function network element (the first network element), the SMF corresponds to the control plane function network element of the core network, and the PCF corresponds to the second network element. This is uniformly described herein.

The session rule may indicate a mapping relationship between a signaling packet and a QoS flow. Different signaling packets of one service may be mapped to different QoS flows or a same QoS flow. In this way, flexibility can be improved. The session rule may also indicate a mapping relationship between all signaling packets of the service and the QoS flow. For example, all signaling packets of one service are mapped to a same QoS flow. In this way, indication overheads can be reduced.

The manner of processing the signaling packet of the service plane may alternatively be configured for the terminal device or the service plane function network element in another manner. This is not limited in embodiments of this application. For example, it is preconfigured that the signaling packet of the service plane is processed in a manner of using the first identifier.

Optionally, the first signaling packet is mapped to the first QoS flow, a second signaling packet is mapped to a second QoS flow, the second signaling packet is a signaling packet sent through the control plane network element, and the first QoS flow and the second QoS flow are different QoS flows. In other words, the signaling packet of the service plane and the signaling packet of the control plane are mapped to different QoS flows, to distinguish the signaling packet of the service plane from the signaling packet of the control plane. Different QoS flows may correspond to different CP-NFs, and different QoS flows correspond to different QoS flow identifiers (QoS flow identifiers, QFIs).

For example, the network side configures, for the terminal device, that session-related service plane signaling is mapped to a QFI 1, location service-related service plane signaling is mapped to a QFI 2, and sensing service-related signaling is mapped to a QFI 3. For another example, signaling of both the session-related service and the sensing-related service is mapped to the QFI 1. A specific mapping relationship is not limited. QoS flows with different QFIs may use a same QoS parameter or different QoS parameters.

Optionally, the session information may be session policy information generated by the PCF or session subscription information generated by the UDM.

For example, the session information is session policy information. For example, as shown in FIG. 8A and FIG. 8B, the terminal device establishes a session based on the service information, and sends a session establishment request to the SMF, where the session establishment request is used to request to establish a session of a service plane, and the session establishment request includes the second capability indication (S204). Correspondingly, the SMF receives the session establishment request. After receiving the second capability indication, the SMF sends a session policy request to the PCF (an example of the second network element), where the session policy request carries the second capability indication (S205) and the identifier of the terminal device. Correspondingly, the PCF receives the session policy request. The PCF performs session policy (SM policy) association, to obtain an SM policy corresponding to the second capability indication, and returns session policy information corresponding to the second capability indication to the SMF (S206). Correspondingly, the SMF receives the session policy information. The SMF sends a session establishment response to the terminal device, where the session establishment response includes the session policy information (S210). Correspondingly, the terminal device receives the session establishment response.

Optionally, the second capability indication may be a specific indication identifier, or a specific DNN, and/or a specific network slice. The second capability indication may be the same as or different from the first capability indication.

In some embodiments, the SMF may learn, by receiving the session information, information (for example, an address) about a CP-NF corresponding to the first signaling packet. In some other embodiments, if the session information does not include the information about the CP-NF corresponding to the first signaling packet, the SMF may obtain the information about the CP-NF corresponding to the first signaling packet from the NRF. For example, as shown in FIG. 8A and FIG. 8B, the SMF sends a CP-NF discovery request to a NRF, where the request is used to request to obtain the information about the CP-NF corresponding to the first signaling packet (S207). Correspondingly, the NRF receives the CP-NF discovery request. The NRF sends a CP-NF discovery response to the SMF, where the response includes the information about the CP-NF corresponding to the first signaling packet (S208). Correspondingly, the SMF receives the CP-NF discovery response.

Alternatively, the terminal device may obtain the service information in another manner. This is not limited in embodiments of this application.

S102: The service plane function network element obtains an identification rule of the first signaling packet, where the first signaling packet includes signaling of the first service, and the first service is a service in which the terminal device performs signaling sending through the service plane.

The first signaling packet includes signaling related to the first service, and the first service is a service in which the terminal device may perform signaling sending through the service plane.

In a possible implementation, as shown in FIG. 8A and FIG. 8B, the UPF receives an identification rule from the SMF, where the identification rule is used by the UPF to identify a signaling packet that carries signaling. In a possible implementation, the SMF generates an identification rule of a signaling packet based on the session subscription information and/or the session policy information of the terminal device, and configures the identification rule for the UPF. Optionally, the SMF generates the identification rule, or the SMF receives the identification rule from another network element.

Optionally, the UPF may further receive a processing rule from the SMF, where the processing rule is the processing manner of the signaling packet of the service plane, and the processing manner includes but is not limited to a forwarding manner. In a possible implementation, the SMF generates a processing rule of a signaling packet based on the session subscription information and/or the session policy information of the terminal device, and configures the processing rule for the UPF.

For example, as shown in FIG. 8A and FIG. 8B, S102 may be implemented as follows: S102a. The SMF sends a session configuration message A to the UPF, where the session configuration message A includes the processing rule of the signaling packet. Correspondingly, the UPF receives the session configuration message A from the SMF. Optionally, the session configuration message A may further include at least one of the following information: the information (for example, the address) about the CP-NF corresponding to the signaling packet of the service plane; or the QoS parameter corresponding to the signaling packet of the service plane.

Optionally, the identification rule of the UPF for the signaling packet includes at least one of the following rules: (1) The packet includes a first identifier, and the first identifier indicates that the packet is the signaling packet transmitted through the service plane; or (2) a QoS flow to which the packet is mapped is a QoS flow to which at least one signaling packet transmitted through the service plane is mapped.

Optionally, the forwarding manner in which the service plane function network element forwards the signaling packet includes at least one of the following rules: (1) The service plane function network element sends the signaling packet of the service plane to the CP-NF based on the information about the CP-NF corresponding to the signaling packet of the service plane; or (2) the service plane function network element sends the signaling packet of the service plane to the SMF (an example of the control plane function network element in the core network), and the SMF forwards the signaling packet of the service plane based on the CP-NF information.

Optionally, the service plane function network element is predefined to use the identification rule (1) or (2) in the protocol. Alternatively, the network side configures the identification rule (1) or (2) for the service plane function network element. For example, when the network side supports configuration of the foregoing two identification rules, the network side dynamically configures an identifier for the service plane function network element, where the identifier indicates that the service plane function network element uses the identification rule (1) or the manner (2). A specific implementation of configuring the identification rule used by the service plane function network element is not limited in this embodiment of this application.

Optionally, the service plane function network element is predefined to use the forwarding manner (1) or (2) in the protocol. Alternatively, the network side configures the forwarding manner (1) or (2) for the service plane function network element. For example, the network side dynamically configures an identifier for the service plane function network element, where the identifier indicates that the service plane function network element uses the forwarding manner (1) or the manner (2). A specific implementation of configuring the forwarding manner used by the service plane function network element is not limited in this embodiment of this application.

In some embodiments, the base station may alternatively receive the identification rule of the signaling packet, so that the base station determines, according to the identification rule, whether the packet is the signaling packet of the service plane. In a possible implementation, as shown in FIG. 8A and FIG. 8B, the SMF sends a session configuration message B to the base station, where the session configuration message B includes the identification rule (S209). Correspondingly, the base station receives the session configuration message B. Optionally, the session configuration message B may further include a QoS parameter corresponding to the signaling packet of the service plane.

Optionally, the identification rule of the base station for the signaling packet of the service plane includes at least one of the following rules: (1) The packet includes a first identifier, and the first identifier indicates that the packet carries signaling and identifies that the signaling packet is transmitted through the service plane; or (2) a QoS flow to which the packet is mapped is a QoS flow to which at least one signaling packet of the service plane is mapped.

S103: The terminal device sends the first signaling packet to the service plane function network element based on the service information, where the first signaling packet includes the signaling of the first service.

Correspondingly, the service plane function network element (an example of the first network element) receives the first signaling packet.

The first service is a service that is indicated by the service information and that supports the terminal device in performing signaling sending through the service plane or allows the terminal device to perform signaling sending through the service plane. In other words, the first service belongs to the at least one service that supports signaling sending through the service plane.

In a possible implementation, the terminal device sends the first signaling packet via the established session of the service plane.

In a possible implementation, the terminal device may determine, based on the service information and the trigger condition, that the first signaling packet needs to be transmitted through the service plane. Optionally, the trigger condition may include but is not limited to at least one of the following conditions: signaling congestion of the control plane; a service corresponding to the first signaling packet is a service that supports signaling transmission through the service plane; the terminal device receives an indication from the network side, where the indication indicates that the terminal device may send signaling through the service plane packet; or the terminal device is located at a first location. For example, the AMF, the SMF, or the CP-NF corresponding to the service sends an indication to the UE, to indicate that the UE may send signaling through the service plane packet. For another example, the service information (UE Policy) indicates that the UE may transmit signaling through the service plane packet at some locations (the first location). In this case, when the UE is within a location range, the UE may send the signaling through the service plane packet. The trigger condition is not limited in this embodiment of this application. Any condition may be considered as the trigger condition herein provided that the terminal device can be triggered to transmit signaling through the service plane, to relieve the signaling congestion of the control plane.

Optionally, the terminal device may determine signaling congestion of the control plane based on an indication delivered by the network (for example, a NAS congestion indication or an RRC message sent by the base station).

For example, the terminal device wants to send signaling of a sensing service. The terminal device may determine, based on the service information shown in Table 1, that the network supports transmission of signaling of the sensing service (an example of the first service) through the service plane. In this case, the terminal device sends the first signaling packet to a service plane function network element (for example, the SPF) corresponding to the sensing service, where the first signaling packet includes the signaling of the sensing service. For another example, the terminal device may determine, based on the service information shown in Table 1, that the network supports transmission of signaling of the sensing service through the service plane, and that signaling congestion currently occurs on the control plane. In this case, the terminal device sends the first signaling packet to the service plane function network element corresponding to the sensing service, where the first signaling packet includes the signaling of the sensing service. In this way, the congestion of the control plane can be reduced, and signaling transmission efficiency can be improved.

For another example, the terminal device wants to send signaling of a service 1. The terminal device may determine, based on the service information shown in Table 1, that the network does not support the terminal device in performing transmission of the signaling of the service 1 through the service plane. In this case, the terminal device sends the signaling of the service 1 (an example of the second service) through the control plane network element. For example, the terminal device sends the signaling to the AMF through the base station.

For another example, the terminal device wants to send data of the sensing service. The terminal device sends, through the service plane function network element corresponding to the sensing service, a data packet carrying the data of sensing service. For a method for sending data and control plane signaling by the terminal device, refer to a related technology. Details are not described again.

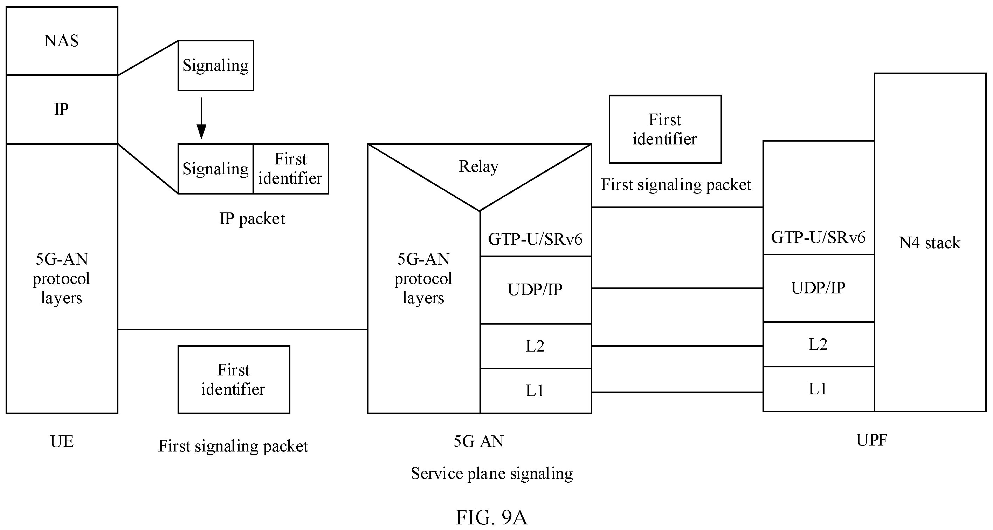

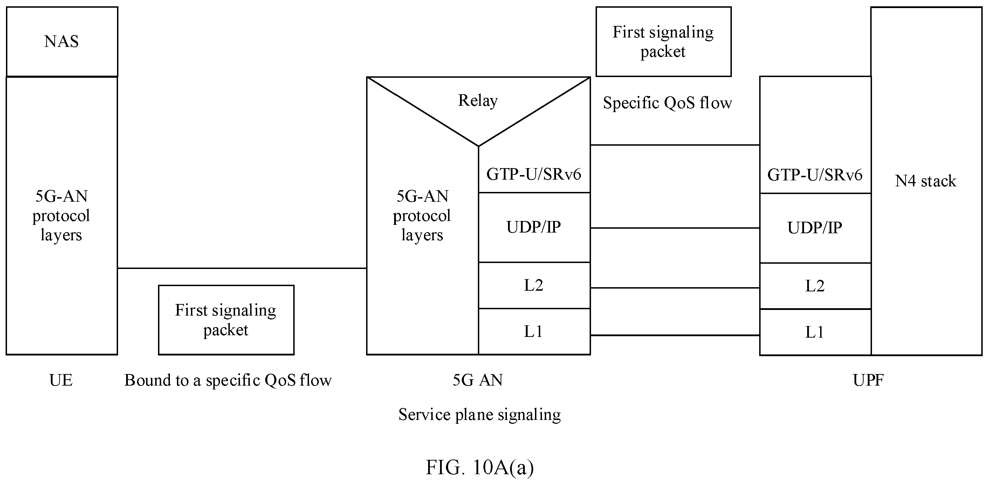

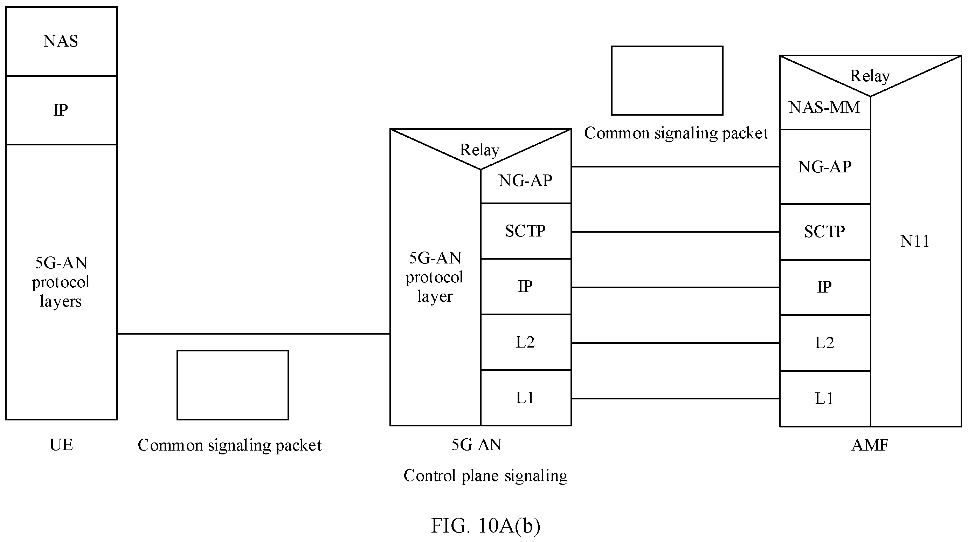

Optionally, the terminal device may send, in any one of the following manners, the first signaling packet carrying the signaling through the service plane:
Manner 1 (corresponding to the foregoing identification rule (1)): For a signaling packet that needs to be transmitted through the service plane, the terminal device encapsulates the first identifier into the IP packet based on the obtained processing manner of the signaling packet of the service plane, to generate the first signaling packet. The first identifier indicates that the first signaling packet carries the signaling. For example, as shown in FIG. 9A, the terminal device encapsulates signaling based on a format of NAS signaling (an example of the signaling of the first service) of the control plane, and the encapsulated signaling is transmitted from a NAS layer to an IP layer. After determining that the NAS signaling needs to be transmitted through the service plane, the IP layer adds a first identifier (which may also be referred to as a service plane signaling identifier) to the signaling, and encapsulates the signaling into an IP packet. The IP packet includes the signaling of the first service and the first identifier. The terminal device may continue to encapsulate the IP packet by using a lower layer, to obtain a first signaling packet including the signaling and the first identifier, and send the first signaling packet to the UPF via an access device (for example, a base station). For example, the first identifier may be a configured destination address. For another example, the first identifier may be an address of a CP-NF corresponding to the service plane signaling. For another example, the first identifier is a special identifier indicating that the packet carries the signaling. The first identifier is not limited in this embodiment of this application. Any identifier may be used as the first identifier provided that the packet can be identified as a signaling packet.
Manner 2 (corresponding to the foregoing identification rule (2)): The terminal device does not need to encapsulate the first identifier into the IP packet. For example, as shown in FIG. 10A(a), the terminal device performs QoS flow mapping on the first signaling packet carrying the NAS signaling, and sends, to the UPF via the base station, the first signaling packet obtained through the QoS flow mapping. Therefore, the terminal device may map the first signaling packet to a special QoS flow (a QoS flow to which the signaling packet is mapped), to indicate that the packet having this QFI is the signaling packet of the service plane. For example, a packet mapped to a QoS flow whose QFI is A may be configured as the signaling packet of the service plane.

In Manner 2, because the terminal device does not need to encapsulate the IP packet, a protocol stack of the terminal device may be optimized and improved accordingly. For example, the IP layer is canceled, or another protocol layer used for routing or switching is canceled.

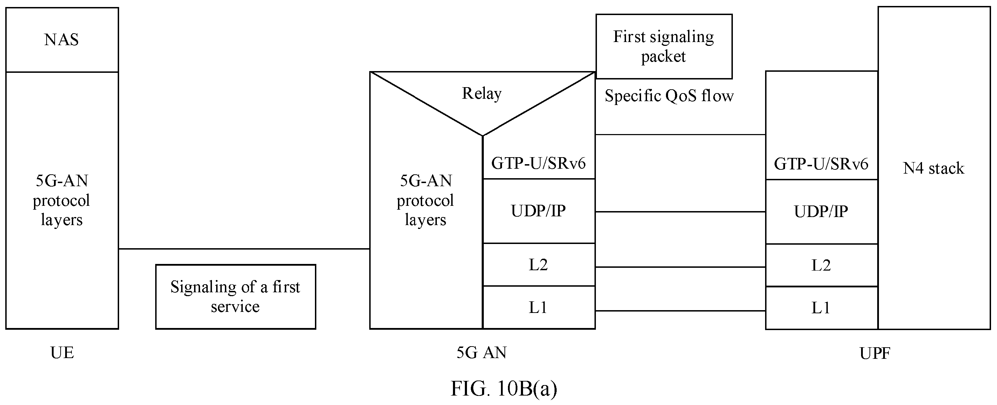

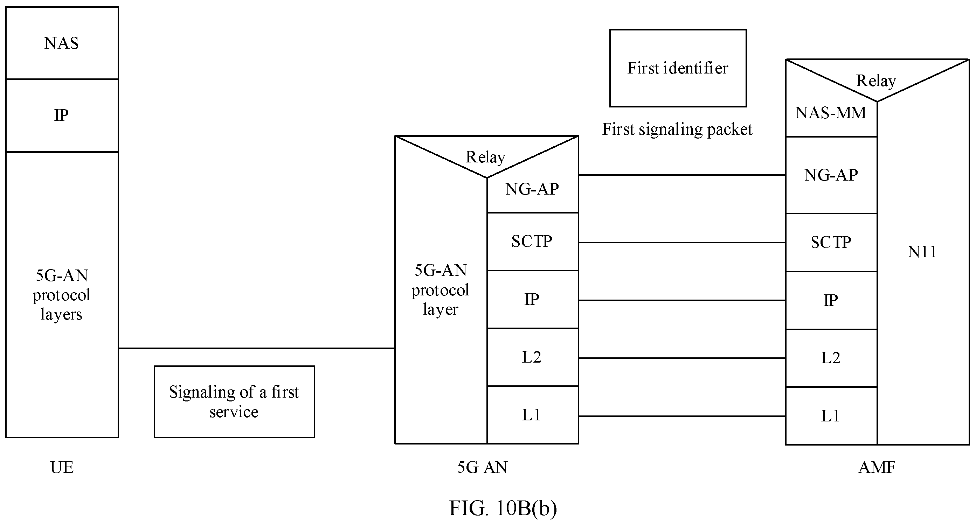

Manner 3: As shown in FIG. 10B(a) and FIG. 10B(b), the terminal device still transmits signaling through the control plane on an air interface, and signaling sent by the terminal device to the base station is still encapsulated in a signaling encapsulation format of the control plane. The base station encapsulates the signaling into the signaling packet of the service plane, and then forwards the signaling packet to the corresponding service plane function network element. For example, the terminal device performs signaling transmission with the base station via an RRC message. The base station encapsulates the NAS message of the terminal device into the signaling packet (carrying the first identifier) of the service plane based on the configuration information obtained from the AMF, the SMF, or another network side device, as shown in FIG. 10B(b), and sends the signaling packet to the UPF; or maps the NAS message to a specific QoS flow, as shown in FIG. 10B(a). Downlink transmission is similar. For example, the base station receives a service plane packet and sends the service plane packet to the terminal device through RRC signaling.

In a possible implementation, the terminal device adds a second identifier to the NAS signaling, to indicate that the NAS signaling is transmitted through the service plane. Optionally, the indication information may further indicate a protocol data unit (protocol data unit, PDU) session bound to the NAS signaling. After receiving the NAS signaling from the terminal device, the base station encapsulates the NAS signaling into a signaling packet of the service plane (or maps the NAS signaling to a specific QoS flow) based on the second identifier in the NAS signaling, and sends the signaling packet of the service plane to a service plane function network element corresponding to a corresponding PDU session. For example, an information element (information element, IE) is added before a container (container) of the NAS signaling, where the IE includes the second identifier, and indicates that the container following the IE needs to be transmitted through the service plane. In this embodiment of this application, a manner of adding the second identifier to the signaling is not limited thereto.

In another possible implementation, the network side notifies the base station that information sent to a specific CP-NF needs to be transmitted through the service plane. For example, NAS signaling sent to the specific CP-NF is bound to a specified PDU session. According to this, the base station encapsulates the NAS signaling that needs to be transmitted through the service plane, or maps the NAS signaling to the specific QoS flow, and transmits the processed NAS signaling to the corresponding service plane function network element.

A name of the signaling of the first service is a name of the signaling of the at least one service plane. For example, different NAS message names correspond to different CP-NFs, and a specific CP-NF to which the NAS message is sent may be distinguished by using the NAS message name. For example, a name of the NAS message sent by the terminal device is "sensing NAS". The base station may know, based on the name of the NAS message, that the NAS message needs to be transmitted through the service plane, and know the CP-NF corresponding to the NAS message. The base station may encapsulate the NAS message based on this, or map the NAS message to the specific QoS flow, and transmit the processed NAS message to the corresponding service plane function network element.

The foregoing uses an example in which the service information (for example, the UE policy) carries the forwarding manner of the signaling packet of the service plane. In some other embodiments, the network side may further carry the forwarding manner of the signaling packet of the service plane in the session information. In this case, the terminal device learns, based on the service information, that the current to-be-transmitted signaling is signaling that may be transmitted through the service plane, and processes and forwards the signaling based on the session information.

According to the method in this embodiment of this application, the network side configures the processing manner of the signaling packet of the service plane for the terminal device, so that the terminal device can send the signaling packet through the service plane, and another network element (for example, the UPF) can identify the signaling packet of the service plane, to perform corresponding processing on the signaling packet of the service plane, thereby reducing a probability that congestion occurs on the control plane when there are excessive signaling packets.

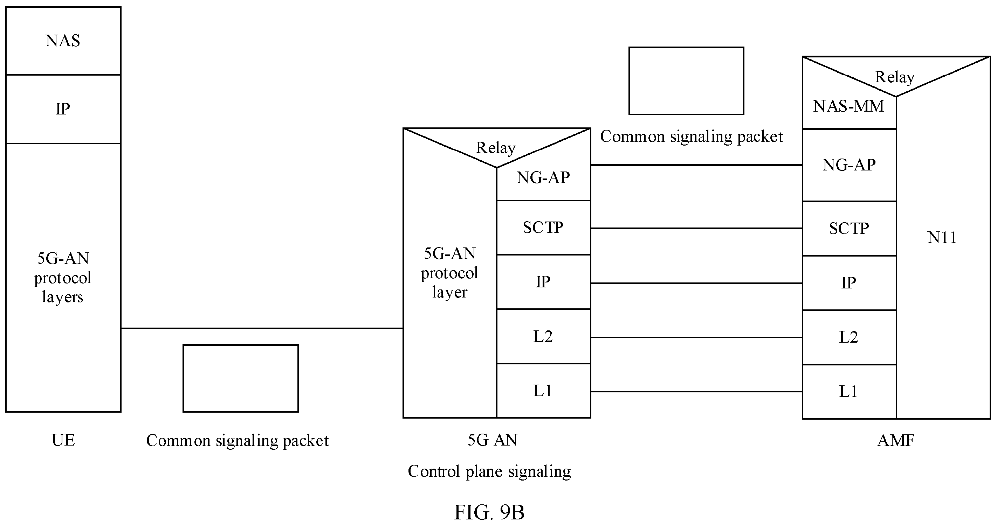

Corresponding to the manner 1 shown in FIG. 9A and FIG. 9B, as shown in FIG. 9A, after the base station receives the first signaling packet from the terminal device, if the first signaling packet includes the first identifier, the base station determines that the first signaling packet is the signaling packet, and the signaling packet needs to be transmitted through the service plane. In this case, the base station sends the first signaling packet to the UPF of the service plane.

As shown in FIG. 9B, after the base station receives the packet from the terminal device, if the packet does not include the first identifier, and the base station determines that the packet is a common signaling packet, the base station sends the signaling packet to a corresponding network element (for example, an AMF) of the control plane.

For another example, after the base station receives the packet from the terminal device, if the packet does not include the first identifier, and the base station determines that the packet is a packet carrying data (not a packet carrying signaling), the base station sends the data packet to the UPF.

Corresponding to the manner 2 shown in FIG. 10A(a) and FIG. 10A(b), as shown in FIG. 10A(a), after the base station receives the first signaling packet from the terminal device, if the first signaling packet is mapped to the specific QoS flow, the base station determines that the first signaling packet is the signaling packet, and the signaling packet needs to be transmitted through the service plane. In this case, the base station sends the first signaling packet to the UPF.

Corresponding to the manner 2 shown in FIG. 10A(a) and FIG. 10A(b), as shown in FIG. 10A(b), after the base station receives the packet from the terminal device, if the packet is not mapped to the specific QoS flow and the base station determines that the packet is a common signaling packet, the base station sends the signaling packet to a corresponding device (for example, an AMF) of the control plane.

Corresponding to the manner 2 shown in FIG. 10A(a) and FIG. 10A(b), after the base station receives the packet from the terminal device, if the packet is not mapped to the specific QoS flow and the base station determines that the packet is a data packet, the base station sends the data packet to the UPF.

S104: The service plane function network element sends the first signaling packet to the core network device according to the identification rule.

Correspondingly, the core network device receives the first signaling packet.

In a possible implementation, the service plane function network element identifies, according to the identification rule, that the first signaling packet is a signaling packet, and sends the signaling packet to the core network device.

Corresponding to the manner 1 shown in FIG. 9A and FIG. 9B, it is assumed that the identification rule of the UPF is that the signaling packet of the service plane includes the first identifier.

In some examples, after receiving the first signaling packet from the base station, the UPF parses the first signaling packet. If the first signaling packet includes the first identifier, the UPF may determine that the first signaling packet is a signaling packet carrying signaling, and the first signaling packet needs to be transmitted through the control plane, and send the first signaling packet to a corresponding core network device of the control plane. For example, if the first signaling packet carries a configured CP-NF ID or a configured CP-NF type, or a name of the first signaling packet is a specific NAS message name, the UPF determines that the first signaling packet is a packet that needs to be transmitted through the service plane.

In some other examples, after the UPF receives the packet from the base station, if the packet does not include the first identifier, and the UPF determines that the packet is a data packet carrying data, the UPF sends the data packet to a corresponding device of the service plane.

Corresponding to the manner 2 shown in FIG. 10A(a) and FIG. 10A(b), it is assumed that the identification rule of the UPF is that a QoS flow to which a packet is mapped is a QoS flow to which at least one signaling packet of the service plane is mapped.

In some examples, the UPF receives a general packet radio service tunneling protocol user plane (general packet radio service tunneling protocol user plane, GTP-U) packet from the base station. If a GTP-U packet header carries a specific QFI (for example, the QFI is A), the UPF determines that the signaling packet is a signaling packet of the service plane that carries signaling, and may transmit the signaling packet to a core network device of the control plane.

In some other examples, the UPF receives a GTP-U packet from the base station. If the GTP-U packet header does not carry a specific QFI, and the UPF determines that the packet is a data packet carrying data, the UPF may transmit the data packet to a corresponding device of the service plane.

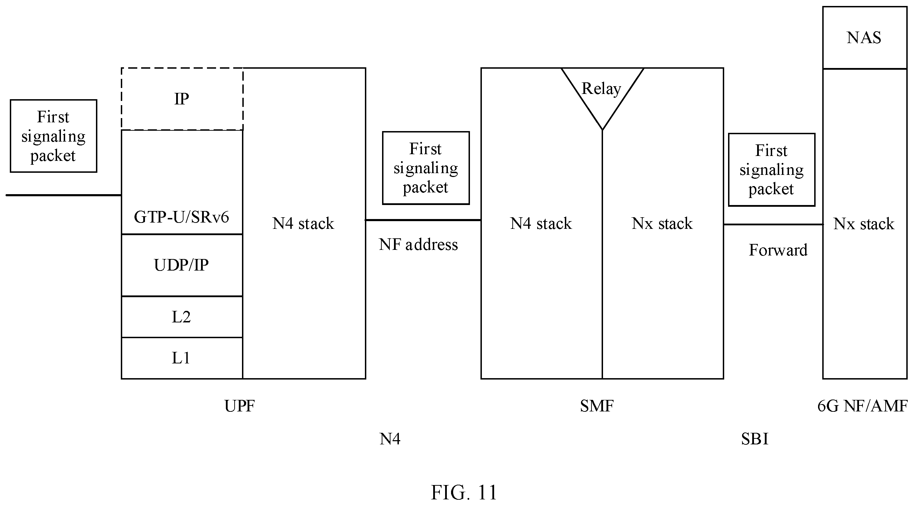

The service plane function network element may send the first signaling packet to the corresponding core network device in any one of the following manners:
Manner 1: As shown in FIG. 11, after identifying, according to the foregoing identification rule, that the first signaling packet is a signaling packet of the service plane, the UPF sends, to the CP-NF network element corresponding to the first signaling packet, the first signaling packet based on address information of the CP-NF network element corresponding to the first signaling packet. Optionally, the UPF may directly send the first signaling packet to the CP-NF corresponding to the first signaling packet. Alternatively, as shown in FIG. 8A and FIG. 8B, the UPF first sends the first signaling packet to the SMF (S104a). Correspondingly, the SMF receives the first signaling packet. The SMF forwards the first signaling packet to the CP-NF corresponding to the first signaling packet (S104b). Correspondingly, the CP-NF receives the first signaling packet.

In Manner 1, the UPF needs to obtain the address information of the CP-NF corresponding to the first signaling packet. In a possible implementation, the UPF may obtain the CP-NF address information in the service information by receiving the service information. Alternatively, after receiving the first signaling packet, if the UPF cannot determine the CP-NF corresponding to the first signaling packet, the UPF may query the NRF for the CP-NF corresponding to the first signaling packet. For example, the UPF may send a CP-NF discovery request, where the request is used to request the address information of the CP-NF corresponding to the first signaling packet. The NRF receives the CP-NF discovery request, and sends a CP-NF discovery response to the UPF, where the CP-NF discovery response includes the address information of the CP-NF corresponding to the first signaling packet. Alternatively, the UPF may obtain the address information of the CP-NF corresponding to the first signaling packet in another manner. This is not limited in embodiments of this application.

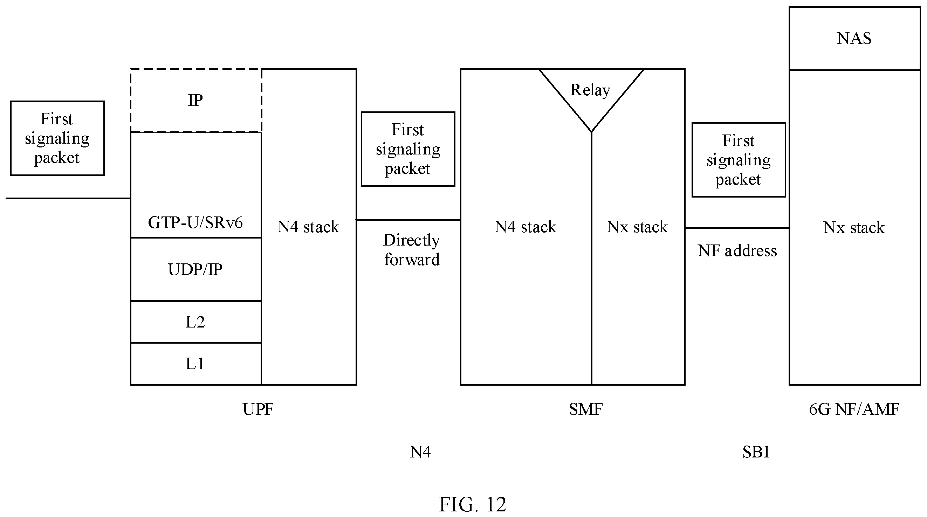

Manner 2: The UPF does not need to know the address information of the CP-NF corresponding to the first signaling packet. As shown in FIG. 12, after identifying, according to the foregoing identification rule, that the first signaling packet is the signaling packet of the service plane, the UPF directly forwards the first signaling packet to the SMF. The SMF determines the address information of the CP-NF corresponding to the first signaling packet, and sends the first signaling packet to the CP-NF based on the address information of the CP-NF.

In Manner 2, the SMF needs to obtain the address information of the CP-NF corresponding to the first signaling packet. In a possible implementation, the service information generated by the SMF includes the address information of the CP-NF corresponding to the first signaling packet. Alternatively, after receiving the first signaling packet, if the SMF cannot determine the CP-NF corresponding to the first signaling packet, the SMF may query the NRF for the CP-NF corresponding to the first signaling packet. Alternatively, the SMF may obtain the address information of the CP-NF corresponding to the first signaling packet in another manner. This is not limited in embodiments of this application.

Optionally, the UPF forwards the first signaling packet through the SMF. The SMF may directly forward the first signaling packet to the CP-NF corresponding to the first signaling packet, or the SMF processes the first signaling packet and sends the processed signaling packet to the corresponding CP-NF.

According to the technical solutions in embodiments of this application, the terminal device and the CP-NF can transmit the signaling packet (for example, the first signaling packet) through the service plane, so that a probability of congestion occurring on the control plane can be reduced, and signaling transmission efficiency can be improved.

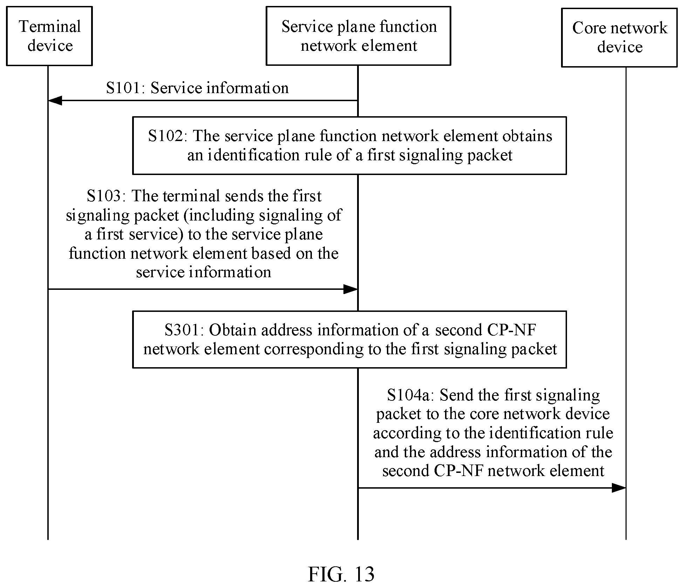

An embodiment of this application further provides a signaling transmission method, to dynamically update information about a CP-NF network element corresponding to a signaling packet of a service plane, so that a terminal device can forward the signaling packet to a correct CP-NF through the service plane. FIG. 13 shows an example of a procedure of the method. As shown in FIG. 13, before S104a, the procedure may further include the following steps.

S301: The service plane function network element obtains address information of a second CP-NF network element corresponding to the first signaling packet.

It is assumed that initially, a CP-NF network element corresponding to the signaling packet of the first service is a first CP-NF network element, and an address of the first CP-NF network element is a first address. Subsequently, a CP-NF that serves the terminal device may change due to a change in different locations of the terminal device, current CP-NF load of a network, or an operator that serves the terminal device. The service plane function network element (for example, a UPF) may obtain address information of an updated CP-NF network element from the network side.

In any embodiment of this specification, the CP-NF may be an original function of the core network, or may be obtained by deploying a function of the external application (App) (that is, an application function (application function, AF)) in the core network by the external application.

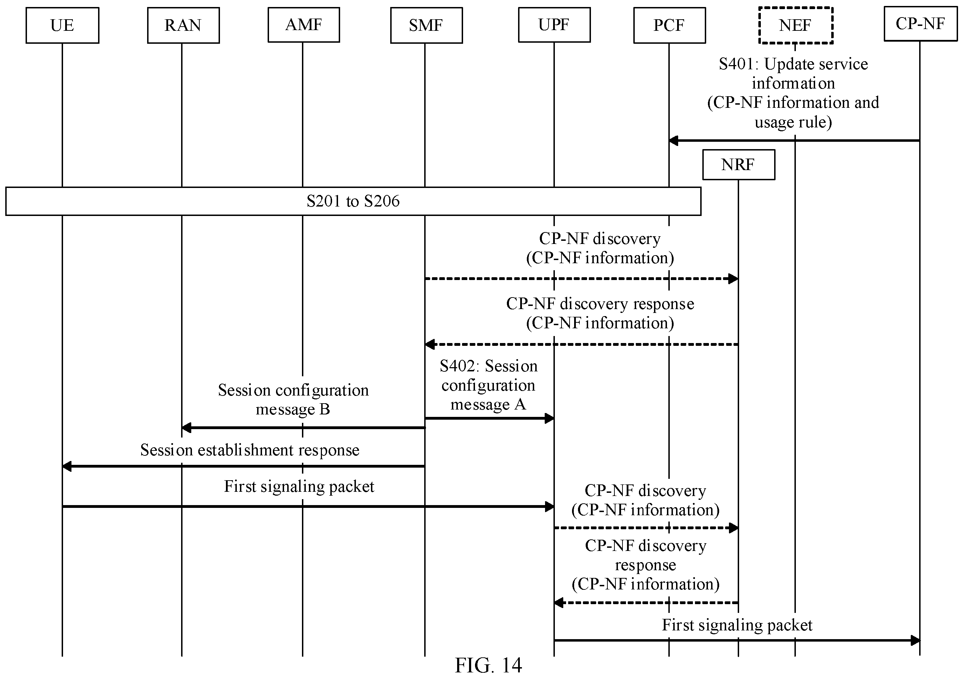

Optionally, in a possible implementation, as shown in FIG. 14, the SMF performs CP-NF discovery, and obtains, from the NRF, information (for example, an address) about a second CP-NF network element that provides a service for the terminal device. It is assumed that the address of the second CP-NF network element is denoted as a second address. The SMF may configure the information about the second CP-NF network element for the UPF via the session configuration message A (S402). For example, if the SMF obtains the address information (the second address) of the second CP-NF network element, the SMF configures a mapping relationship between the first address and the second address for the UPF. For another example, the SMF configures, for the UPF, a mapping relationship between the second address and a QFI (or a CP-NF identifier) used by the signaling packet of the service plane. In this way, the UPF completes updating of the CP-NF information.

Alternatively, in another possible implementation, if the UPF does not obtain the address information (the second address) of the second CP-NF network element from the SMF, the UPF may query the NRF for the second address.

After obtaining the address information of the second CP-NF network element, the service plane function network element performs the following step S104a.

S104a: The service plane function network element sends the first signaling packet to the control plane function network element of the core network or to the second CP-NF network element according to the identification rule and the address information of the second CP-NF network element.

Correspondingly, the control plane function network element of the core network or the second CP-NF network element receives the first signaling packet.

The service plane function network element determines, based on the address information of the second CP-NF network element, for example, based on the mapping relationship between the second address and the QFI (or the CP-NF identifier) of the signaling packet of the service plane, or the mapping relationship between the first address and the second address, or a mapping relationship between the CP-NF address sent by the terminal device and the second address, that the destination address of the signaling packet of the first service is updated to the second address, and sends the signaling packet of the first service to the CP-NF corresponding to the second address.

Optionally, as shown in FIG. 14, the method may further include S401: Update service information (for example, update service policy information of the PCF).

For example, the AF or the CP-NF that may use the service plane to transmit signaling may initiate a service request to the PCF or the UDM, to request the PCF or the UDM to update a capability of the terminal device, so that the terminal device may communicate with the AF or the CP-NF through a signaling packet. The request message may carry at least one of the following information: CP-NF information (for example, a CP-NF ID or a CP-NF type); address information used for transmitting a signaling packet of the service plane; a corresponding usage rule; or identity information or address information (for example, a UE ID or a UE IP) used to identify the terminal device. Optionally, the usage rule includes at least one of the following information: a session parameter (for example, slice information); a time at which a service may be used; a location at which a service is allowed to be used; or a radio interface at which a service is allowed to be used.

For specific implementation of other steps in FIG. 14, refer to related steps in other embodiments. Details are not described again.

Optionally, step S401 may also be applied to the methods corresponding to FIG. 7 and FIG. 8A and FIG. 8B.

In some embodiments, the service plane function network element sends the signaling of the service plane to the CP-NF based on the updated CP-NF address. In some other embodiments, the network side configures the updated CP-NF address for the SMF, and the SMF sends the signaling of the service plane to the CP-NF based on the updated CP-NF address.

The foregoing mainly describes a service plane transmission process of uplink signaling. For a service plane transmission process of downlink signaling, refer to the service plane transmission process of uplink signaling. For example, the CP-NF sends a signaling packet (for example, carrying the first identifier or mapped to the specific QoS flow) to the control plane function network element of the core network. The control plane function network element of the core network identifies, according to the identification rule configured on the network side, that the signaling packet needs to be transmitted through the service plane, and then sends the signaling packet to the service plane function network element. The service plane function network element forwards the signaling packet to the terminal device. For another example, the CP-NF directly sends the signaling packet to the service plane function network element, and the service plane function network element forwards the signaling packet to the terminal device.

It should be noted that the foregoing plurality of embodiments may be combined, and a combined solution is implemented. Optionally, some operations in processes of the foregoing method embodiments are randomly combined, and/or a sequence of some operations is randomly changed. In addition, an execution sequence between steps of each process is merely an example, and does not constitute a limitation on an execution sequence between the steps. The steps may alternatively be performed in another execution sequence. This is not intended to indicate that the execution sequence is the only sequence in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

Moreover, some steps in the method embodiments may be equivalently replaced with other possible steps. Alternatively, some steps in the method embodiments may be optional, and may be deleted in some use scenarios. Alternatively, another possible step may be added to the method embodiments. Alternatively, execution bodies (for example, a functional module) of some steps in the method embodiments may be replaced with other execution bodies.

In addition, the method embodiments may be implemented separately or in combination.

Some other embodiments of this application provide an apparatus. The apparatus may be the foregoing terminal device, the service plane function network element (the first network element), the control plane function network element of the core network, the access device, the second network element, the corresponding component (for example, the chip system), or the like. The apparatus may include a memory and one or more processors. The memory is coupled to the processor. The memory is configured to store computer program code, and the computer program code includes computer instructions. When the processor executes the computer instructions, the apparatus may perform functions or steps performed by the corresponding apparatus in the foregoing method embodiments. For a structure of the apparatus, refer to the device (apparatus) shown in FIG. 6.

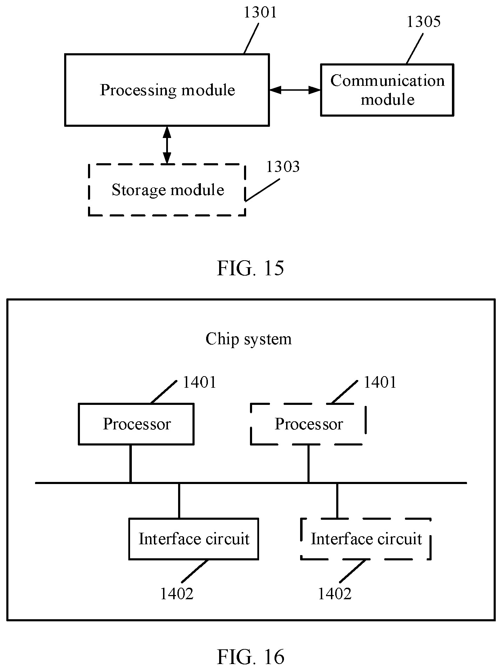

A core structure of the apparatus may be represented as a structure shown in FIG. 15. The apparatus includes a processing module 1301 and a communication module 1305.

The processing module 1301 may include at least one of a central processing unit (CPU), an application processor (Application Processor, AP), or a communication processor (Communication Processor, CP). The processing module 1301 may perform an operation or data processing related to control and/or communication of at least one of other elements of user equipment.

The communication module 1305 is configured to support a personal apparatus in communicating with another personal apparatus (through a communication network). For example, the communication module may be connected to a network through wireless communication or wired communication, to communicate with another personal apparatus or a network server. The wireless communication may use at least one of cellular communication protocols such as long term evolution (LTE), 5G, 6G, long term evolution advanced (LTE-A), code division multiple access (CDMA), wideband code division multiple access (WCDMA), universal mobile telecommunications system (UMTS), wireless broadband (WiBro), and a global system for mobile communications (GSM). The wireless communication may include, for example, short-range communication. The short-range communication may include at least one of wireless fidelity (Wi-Fi), Bluetooth, near field communication (NFC), magnetic stripe transmission (MST), or GNSS.

Optionally, the apparatus further includes a storage module 1303, and the storage module may include a volatile memory and/or a non-volatile memory. The storage module is configured to store instructions or data related to at least one of other modules of a user apparatus device.

It should be noted that each functional module of the apparatus may perform one or more steps in the foregoing method embodiments.

An embodiment of this application further provides a chip system. As shown in FIG. 16, the chip system includes at least one processor 1401 and at least one interface circuit 1402. The processor 1401 and the interface circuit 1402 may be interconnected through a line. For example, the interface circuit 1402 may be configured to receive a signal from another apparatus (for example, a memory of the device). For another example, the interface circuit 1402 may be configured to send a signal to another apparatus (for example, the processor 1401). For example, the interface circuit 1402 may read instructions stored in the memory, and send the instructions to the processor 1401. When the instructions are executed by the processor 1401, the device is enabled to perform the steps in the foregoing embodiments. Certainly, the chip system may further include another discrete component. This is not specifically limited in embodiments of this application.

An embodiment of this application further provides a computer storage medium. The computer storage medium includes computer instructions. When the computer instructions are run on the foregoing electronic device, the electronic device is enabled to perform corresponding functions or steps in the foregoing method embodiments.

An embodiment of this application further provides a computer program product. When the computer program product runs on a computer, the computer is enabled to perform corresponding functions or steps in the foregoing method embodiments.

The foregoing descriptions about implementations allow a person skilled in the art to clearly understand that, for the purpose of convenient and brief description, division of the foregoing functional modules is used as an example for illustration. In actual application, the foregoing functions can be allocated to different modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented via some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions in embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip or the like) or a processor (processor) to perform all or some of the steps of the methods described in embodiments of this application. The storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A signaling transmission method, applied to a terminal device, wherein the method comprises:
receiving service information, wherein the service information indicates information about at least one service that supports signaling sending through a service plane; and
sending a first signaling packet to a first network element of the service plane based on the service information, wherein the first signaling packet comprises signaling of a first service, and the first service is one of the at least one service.

2. The method according to claim 1, wherein the method further comprises:
sending signaling of a second service through a control plane network element based on the service information, wherein the second service is a service that does not support signaling sending through the service plane.

3. The method according to claim 1 or 2, wherein
the first signaling packet further comprises a first identifier, and the first identifier indicates that the first signaling packet is a signaling packet of the service plane; or
a quality of service QoS flow to which the first signaling packet is mapped is a first QoS flow, and the first QoS flow is a QoS flow to which the signaling of the service plane of the first service is mapped.

4. The method according to any one of claims 1 to 3, further comprising:
receiving session information, wherein the session information comprises at least one of the following information: a session rule of the service plane; or a processing manner of the signaling packet of the service plane, wherein
the session rule comprises at least one of the following information: a mapping relationship between the first signaling packet and the QoS flow; information about a target network function of the first signaling packet; or charging information of the first service; and
the processing manner of the signaling packet of the service plane comprises any of the following manners: the signaling packet of the service plane comprises one identifier; or the signaling packet of the service plane is mapped to one QoS flow.

5. The method according to claim 4, wherein sending the first signaling packet to the first network element of the service plane based on the service information comprises:
sending the first signaling packet to the first network element based on the service information and the session information.

6. The method according to any one of claims 1 to 5, wherein the first signaling packet is mapped to the first QoS flow, a second signaling packet is mapped to a second QoS flow, the second signaling packet is a signaling packet sent through the control plane, and the first QoS flow and the second QoS flow are different QoS flows.

7. The method according to any one of claims 1 to 6, wherein before receiving the service information, the method further comprises:
sending a first message, wherein the first message comprises the first capability indication, the first message is used to request the service information, and the first capability indication indicates that the terminal device supports signaling transmission through the service plane; and
receiving the service information comprises:
receiving the service information corresponding to the first capability indication.

8. The method according to claim 4 or 5, wherein before receiving the session information, the method further comprises:
sending a second message, wherein the second message comprises a second capability indication, the second message is used to request the session information, and the second capability indication indicates that the terminal device supports signaling transmission through the service plane; and
receiving the session information comprises:
receiving the session information corresponding to the second capability indication.

9. The method according to any one of claims 1 to 8, wherein the service information comprises at least one of the following information: whether the terminal device is supported in performing signaling sending through the service plane; or the processing manner of the signaling packet of the service plane.

10. A signaling transmission method, applied to a terminal device, wherein the method comprises:
generating signaling of a first service, wherein the first service is a service that supports the terminal device in performing signaling sending through a service plane; and
sending the signaling of the first service to an access device, wherein the signaling of the first service indicates the access device to send a first signaling packet to a first network element of the service plane, and the first signaling packet comprises the signaling of the first service.

11. The method according to claim 10, wherein the signaling of the first service comprises a second identifier, and the second identifier indicates that the signaling of the first service is signaling of the service plane; and/or a name of the signaling of the first service is a name of the signaling of the service plane.

12. A signaling transmission method, applied to a first network element of a service plane, and comprising:
obtaining an identification rule of a first signaling packet, wherein the first signaling packet comprises signaling of a first service, the first service is a service in which a terminal device performs signaling sending through the service plane, and the identification rule is used to identify that the first signaling packet is a signaling packet of the service plane;
receiving the first signaling packet; and
sending the first signaling packet to a core network device according to the identification rule.

13. The method according to claim 12, wherein the identification rule comprises at least one of the following rules: the first signaling packet comprises a first identifier, and the first identifier indicates that the first signaling packet is the signaling packet of the service plane; or a QoS flow to which the first signaling packet is mapped is a first QoS flow, and the first QoS flow is a QoS flow to which the signaling of the service plane of the first service is mapped.

14. The method according to claim 12 or 13, wherein the core network device is a control plane function network element of a core network.

15. The method according to claim 12 or 13, wherein the core network device is a control plane function network element or a control plane network function CP-NF network element of a core network, and the method further comprises:
obtaining address information of a CP-NF network element corresponding to the first signaling packet; and
sending the first signaling packet to the core network device according to the identification rule comprises:
sending the first signaling packet to the core network device according to the identification rule and the address information of the CP-NF network element.

16. The method according to claim 15, wherein the CP-NF network element is a first CP-NF network element, and the method further comprises:
receiving address information of a second CP-NF network element corresponding to the first signaling packet; and
sending the first signaling packet to the control plane function network element of the core network or to the second CP-NF network element based on the address information of the second CP-NF network element.

17. A signaling transmission method, applied to a control plane function network element of a core network, wherein the method comprises:
obtaining an identification rule, wherein the identification rule is used to identify that a first signaling packet is a signaling packet of a service plane, the first signaling packet comprises signaling of a first service, the first service is a service that supports a terminal device in performing signaling sending through the service plane, and the first network element is configured to forward the signaling packet of the service plane; and
sending the identification rule to the first network element.

18. The method according to claim 17, further comprising:
receiving the first signaling packet from the first network element;
obtaining address information of a control plane network function CP-NF network element corresponding to the first signaling packet; and
sending the first signaling packet to the CP-NF network element based on the address information of the CP-NF network element.

19. The method according to claim 17 or 18, wherein the CP-NF network element is a first CP-NF network element, and the method further comprises:
receiving address information of a second CP-NF network element corresponding to the first signaling packet; and
sending the first signaling packet to the second CP-NF network element based on the address information of the second CP-NF network element.

20. The method according to any one of claims 17 to 19, wherein the identification rule comprises at least one of the following rules: the first signaling packet comprises a first identifier, and the first identifier indicates that the first signaling packet is the signaling packet of the service plane; or a QoS flow to which the first signaling packet is mapped is a first QoS flow, and the first QoS flow is a QoS flow to which the signaling of the service plane of the first service is mapped.

21. A signaling transmission method, applied to an access device, wherein the method comprises:
receiving signaling of a first service, wherein the first service is a service that supports a terminal device in performing signaling sending through a service plane; and
sending a first signaling packet to a first network element of the service plane, wherein the first signaling packet comprises the signaling of the first service.

22. The method according to claim 21, wherein the signaling of the first service comprises a second identifier, and the second identifier indicates that the signaling of the first service is signaling of the service plane; and/or a name of the signaling of the first service is a name of the signaling of the service plane.

23. A signaling transmission method, applied to a second network element, wherein the method comprises:
receiving first capability indication information, wherein the first capability indication indicates that a terminal device supports signaling transmission through a service plane; and
sending service information corresponding to the first capability indication, wherein the service information indicates information about at least one service that supports signaling sending through the service plane.

24. The method according to claim 23, further comprising:
receiving a second capability indication, wherein the second capability indication indicates that the terminal device supports signaling transmission through the service plane; and
sending session information corresponding to the second capability indication, wherein the session information comprises at least one of the following information: a session rule of the service plane; or a processing manner of a signaling packet of the service plane, wherein
the session rule comprises at least one of the following information: a mapping relationship between the first signaling packet and a quality of service QoS flow; information about a target network function of the first signaling packet; or charging information of the first service; and
the processing manner of the signaling packet of the service plane comprises any one of the following manners: encapsulating a first identifier into the signaling packet of the service plane; or mapping the signaling packet of the service plane to a first QoS flow.

25. A computer-readable storage medium, comprising a program or instructions, wherein when the program or the instructions is/are executed, the method according to any one of claims 1 to 9 is implemented, the method according to claim 10 or 11 is implemented, the method according to any one of claims 12 to 16 is implemented, the method according to any one of claims 17 to 20 is implemented, the method according to claim 21 or 22 is implemented, or the method according to claim 23 or 24 is implemented.

26. A computer program product, wherein when the computer program product runs on a device, the device is enabled to perform the method according to any one of claims 1 to 9, perform the method according to claim 10 or 11, perform the method according to any one of claims 12 to 16, perform the method according to any one of claims 17 to 20, perform the method according to claim 21 or 22, or perform the method according to claim 23 or 24.

27. A communication apparatus, wherein the communication apparatus comprises a processor, and the processor is connected to a memory; and
the memory is configured to store computer-executable instructions, and when the communication apparatus runs, the processor executes the computer-executable instructions stored in the memory, to enable the communication apparatus to perform the method according to any one of claims 1 to 9, perform the method according to claim 10 or 11, perform the method according to any one of claims 12 to 16, perform the method according to any one of claims 17 to 20, perform the method according to claim 21 or 22, or perform the method according to claim 23 or 24.

28. The communication apparatus according to claim 27, wherein the communication apparatus is a chip.

29. A signaling transmission system, wherein the system comprises a terminal device that implements the method according to any one of claims 1 to 9 and a first network element that implements the method according to any one of claims 12 to 16; or the system comprises a terminal device that implements the method according to claim 10 or 11, an access device that implements the method according to claim 21 or 22, and a first network element that implements the method according to any one of claims 12 to 16.
